# EUROPEAN PATENT APPLICATION

(11) **EP 1 484 878 A2**
(43) Date of publication of application: **08.12.2004**
(21) Application number: 04003016.5
(22) Date of filing: 11.02.2004
(51) Int. Cl.: H04L 25/06

(54) **Data reception method, data reception apparatus and data transmission system**

(30) Priority: 02.06.2003 JP 2003156681; 31.10.2003 JP 2003373518
(71) Applicant: MATSUSHITA ELECTRIC INDUSTRIAL CO., LTD., Kadoma-shi, Osaka 571-8501 (JP)
(72) Inventor: Akita, Takashi, Osaka-shi Osaka-fu 532-0022 (JP); Katta, Noboru, Itami-shi Hyogo-ken 664-0017 (JP); Sakai, Takahisa, Amagasaki-shi Hyogo-ken 661-0953 (JP); Mizuguchi, Yuji, Hirakata-shi Osaka-fu 573-0165 (JP); Kawada, Hirotsugu, Osaka-shi Osaka-fu 543-0043 (JP); Umei, Toshitomo, Settsu-shi Osaka-fu 566-0033 (JP)
(74) Representative: Balsters, Robert

(57) **Abstract**

A data reception method, an apparatus implementing such a method, and a data transmission system are disclosed, in which appropriate evaluation levels for signal levels are set during initialization of data communications using small circuitry. A comparator (574) compares a difference value (dd) against its corresponding model value. If the difference value (dd) is greater than the model value, the comparator (574) updates one of registers (576a) to (576n) which is currently selected, by adding a predetermined numeric value to the model value. If the difference value (dd) is smaller than the model value, the comparator (574) updates one of the registers (576a) to (576n) which is currently selected, by subtracting a predetermined numeric value from the model value. An evaluation level value arithmetic circuit (572) calculates evaluation levels (R1) to (R13) using model values set in the registers (576a) to (576n), and stores the evaluation levels (R1) to (R13) respectively to registers (577a) to (577m) of an evaluation level storage section (573).

## Description

### BACKGROUND OF THE INVENTION

### Field of the Invention

The present invention relates to a data reception method, an apparatus implementing such a method, and a data transmission system, and more particularly to a data reception method, an apparatus implementing such a method, and a data transmission system, in which apparatuses are connected via transmission paths in a ring topology, for example, and unidirectional electrical communication is performed by setting evaluation levels to each apparatus.

### Description of the Background Art

Transmission of Internet information or image information within an automobile or the like, as applied in car navigation or ITS (Intelligent Transport Systems) technology in recent years , requires large data transfers and fast communications . Communication methods for transmitting such digitized image and/or voice data, or digital data (e.g., computer data) , are being studied vigorously. There already exists practical implementations of networks for use in digital data transmission within an automobile or the like. Such an on-vehicle network adopts a ring topology as its physical topology. Specifically, a plurality of nodes are connected in a ring topology forming a unidirectional ring-type LAN for which interconnects audio devices, navigation devices, information terminal devices, and the like in a unified manner. One example of an information communication protocol used in a ring-type LAN is MOST (Media Oriented Systems Transport). MOST not only defines a communication protocol but also refers to manners of constructing distributed systems. The data on a MOST network is transmitted on a frame-by-frame basis, such that frames are transmitted sequentially from node to node in one direction.

In the case of a ring-type LAN provided inside an automobile, for example, the radiation noise from the LAN may cause malfunctioning of other electronic devices mounted in the automobile. On the other hand, radiation noise from such other devices should not hinder proper transmission. Therefore, in a conventional ring-type LAN which employs MOST, the nodes are typically interconnected via fiber-optic cables so as to improve noise immunity while preventing electromagnetic waves from being generated. However, inexpensive cables, such as twisted pair cables or coaxial cables, may also be used to perform electrical communications; there have been implementations of this technique which realize a fast data transmission rate exceeding 20 Mbps while reducing radiation noise and improving noise immunity. For example, in a system which is disclosed in International Publication No. WO 02/30077, a signal to be transmitted in the above-described electrical communication is sent out to a transmission path in such a manner that a digital signal is mapped to any of eight signal levels at symbol timing.

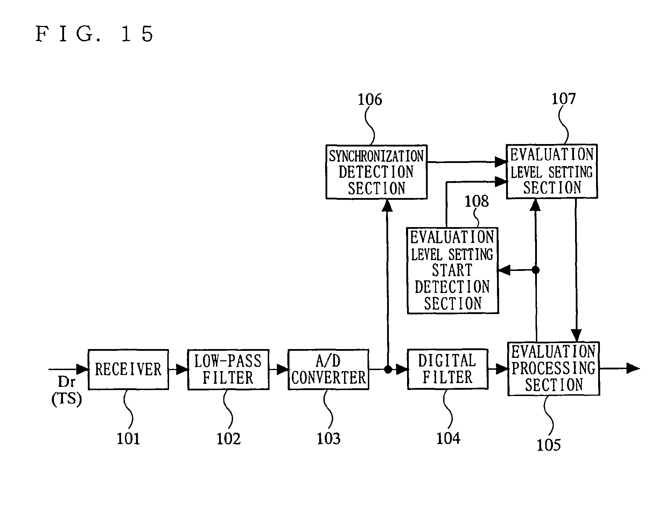

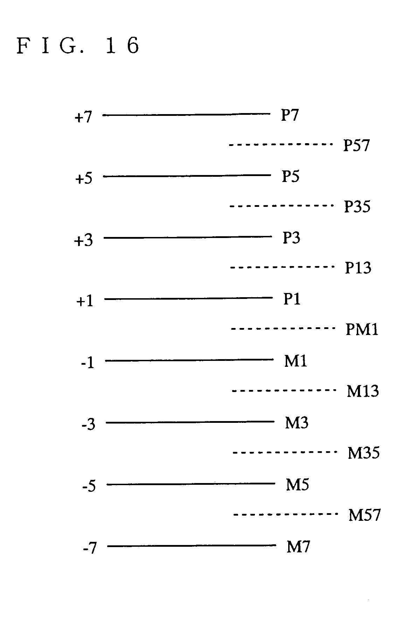

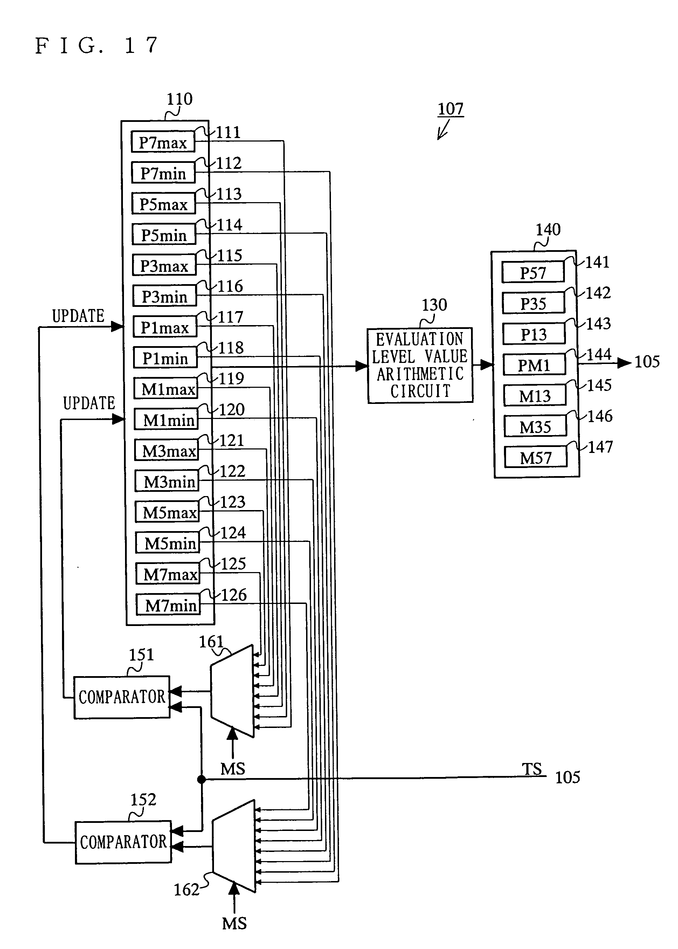

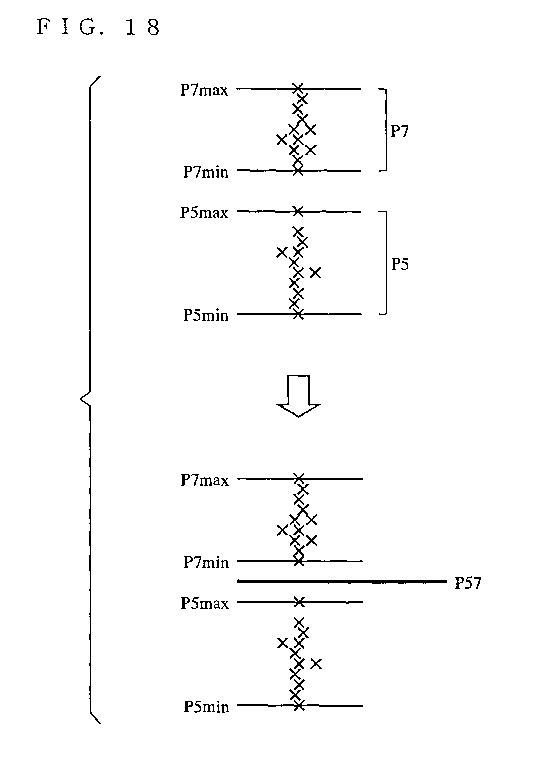

With reference to FIGS. 15 to 18, a data reception apparatus is described which is disclosed in International Publication No. WO 02/30077. FIG. 15 is a block diagram illustrating a configuration of the data reception apparatus ; FIG. 16 is a diagram for explaining an evaluation level of the data reception apparatus; FIG. 17 is a block diagram illustrating an internal configuration of an evaluation level setting section 107 illustrated in FIG. 15; and FIG. 18 is a diagram for explaining a method of setting evaluation levels in the data reception apparatus.

In FIG. 15, the data reception apparatus includes a receiver 101, a low-pass filter 102, an A/D converter 103, a digital filter 104, an evaluation processing section 105, a synchronization detection section 106, an evaluation level setting section 107, and an evaluation level setting start detection section 108. The receiver 101 receives from another apparatus an electrical signal Dr, for example, such that a digital signal is mapped to any of eight signal levels at every symbol timing. The low-pass filter 102 removes noise outside the signal band of the electrical signal Dr received by the receiver 101, and sends the electrical signal Dr to the A/D converter 103. The A/D converter 103 converts the electrical signal Dr to a digital signal, and sends the digital signal to the digital filter 104 and the synchronization detection section 106. The digital filter 104 allows a frequency band corresponding to half of the symbol rate of the digital signal outputted from the A/D converter 103 to pass therethrough, and outputs the digital signal to the evaluation processing section 105. The synchronization detection section 106 detects the synchronization of the digital signal outputted from the A/D converter 103. The evaluation level setting section 107 sets evaluation levels to be used as thresholds in evaluating the signal level of the signal outputted from the digital filter 104. The evaluation level setting start detection section 108 detects an evaluation level setting start pattern signal which is transmitted from another apparatus. The evaluation processing section 105 decodes a data symbol of the signal outputted from the digital filter 104, based on an evaluation level set in the evaluation level setting section 107.

The electrical signal Dr is obtained in a data transmission apparatus (not shown) by mapping eight data symbols to eight signal levels. For example, the electrical signal Dr is designed so that the data symbols are mapped to any of the eight signal levels, "+7", "+5", "+3", "+1", "-1", "-3", "-5", and "-7" (see FIG. 16). In order to evaluate the signal level of such an electrical signal Dr, the data reception apparatus sets a set of evaluation levels prior to data transmission. When performing this evaluation level setting process, an initialization pattern signal (hereinafter referred to as a "training signal TS") is sent from the data transmission apparatus. The training signal TS contains a synchronization pattern signal for establishing synchronization at the receiving end; an evaluation level setting start pattern signal which may be represented by maintaining the maximum amplitude level for a predetermined period of time, for example; and an evaluation level setting pattern signal having a data pattern which is predetermined between the data transmission apparatus and the data reception apparatus. The evaluation level setting pattern signal may be a PN pattern signal which contains all of the above-described signal levels in various patterns. The data transmission apparatus outputs a training signal TS when, for example, the power is turned on.

When the data reception apparatus receives the synchronization pattern signal contained in the training signal TS, the data reception apparatus recovers a clock in the synchronization detection section 106 and detects the establishment of synchronization. Thereafter, the evaluation level setting start pattern signal is detected by the evaluation level setting start detection section 108. When the training signal TS is received, the evaluation level setting is performed in the evaluation level setting section 107.

The evaluation level setting section 107 treats the aforementioned eight signal levels as P7, P5, P3, P1, M1, M3, M5, and M7, respectively. The evaluation level setting section 107 then sets evaluation levels P57, P35, P13, PM1, M13, M35, and M57 so as to come respectively between these signal levels (see FIG. 16).

In FIG. 17, the evaluation level setting section 107 includes: a maximum/minimum signal level storage section 110; an evaluation level value arithmetic circuit 130; an evaluation level storage section 140; comparators 151 and 152; and selectors 161 and 162. The maximum/minimum signal level storage section 110 has registers 111 to 126 for holding the maximum and minimum values for each signal level. The registers which hold the maximum value for each signal level are connected to the selector 161, whereas the registers which hold the minimum value for each signal level are connected to the selector 162. The training signal TS is inputted to the comparators 151 and 152. To the comparators 151 and 152, the selectors 161 and 162 respectively output the maximum and minimum values corresponding to the signal level of the currently-input training signal TS that are held in the maximum/minimum signal level storage section 110, in response to a teacher signal MS which is synchronized with the training signal TS. The comparator 151 compares the signal level of the currently-input training signal TS against the corresponding maximum value held in the maximum/minimum signal level storage section 110. If the current signal level of the training signal TS exceeds the above-described maximum value, the comparator 151 updates the register in the maximum/minimum signal level storage section 110 that holds the maximum value of the signal level to the current signal level. The comparator 152 compares the signal level of the currently-input training signal TS against the corresponding minimum value held in the maximum/minimum signal level storage section 110. If the current signal level of the training signal TS is smaller than the above-described minimum value, the comparator 152 updates the register in the maximum/minimum signal level storage section 110 that holds the minimum value of the signal level to the current signal level.

Such an update is repeated until the very maximum and minimum values for each signal level of the training signal TS are held in the maximum/minimum signal level storage section 110. Then, the evaluation level value arithmetic circuit 130 calculates each evaluation level between adjacent signal levels using the maximum and minimum values for each signal level held in the maximum/minimum signal level storage section 110, and outputs the calculated evaluation levels to the evaluation level storage section 140. Specifically, the evaluation level value arithmetic circuit 130 calculates the evaluation level between adjacent signal levels by taking an average between the minimum value of the greater signal level and the maximum value of the smaller signal level. For example, as shown in FIG. 18, the evaluation level value arithmetic circuit 130 calculates an evaluation level P57 by taking an average between a minimum value P7min of the signal level P7 and a maximum value P5max of the signal level P5. The evaluation level storage section 140 has registers 141 to 147 for holding the respective evaluation levels.

In the training signal TS to be sent from the data transmission apparatus, however, an unexpected noise may be added or a sudden level change may occur. If the maximum or minimum value for each signal level of the training signal TS is changed due to such an abrupt fluctuation, the resulting changed maximum or minimum value will be held in the maximum/minimum signal level storage section 110. As shown in FIG. 18, the calculation of the evaluation level P57 only uses the minimum value P7min of the signal level P7 and the maximum value P5max of the signal level P5, and other values of the signal levels P7 and P5 are not used. Accordingly, an evaluation level may be set based on the maximum or minimum value which is merely a result of such an abrupt fluctuation. With such an evaluation level, it is difficult to evaluate a proper signal level upon subsequent data reception.

Moreover, since the comparators and registers included in the evaluation level setting section 107 must compare each signal level against its maximum and minimum values and hold such values, the size of the circuit is increased, causing an increase in the cost of the data reception apparatus.

### SUMMARY OF THE INVENTION

Therefore, an object of the present invention is to provide a data reception method, an apparatus implementing such a method, and a data transmission system, in which appropriate evaluation levels for signal levels are set during initialization of data communications, such setting being realized with small circuitry.

The present invention has the following features to attain the object mentioned above. It is to be understood that reference numerals, etc., in parentheses are provided, for the purpose of assisting in the understanding of the present invention and showing the corresponding relationship with an embodiment, as will be described later, and thus are not intended to limit the scope of the present invention.

A data reception method of the present invention is a method for receiving a transmitted transmission signal in which symbols of transmission data are each mapped to any of a plurality of signal levels (+7, +5, +3, +1, -1, -3, -5, and -7), the method comprising at the time of initialization: detecting signal levels from a training pattern corresponding to the symbols , the training pattern being such that the plurality of signal levels of the transmission signal are sent in a known variation pattern (a signal based on PN data) ; initializing a model value (P1 to P14) of each of the plurality of signal levels to be received according to predetermined conditions, and holding the model values; repeating a process of comparing a currently detected signal level with an existing model value based on the symbols of the training pattern and updating the existing model value to a new model value obtained by increasing or decreasing the existing model value by a predetermined amount, depending on whether the currently detected signal level is greater or smaller than the existing model value; and setting evaluation levels (R1 to R13) using the model values updated based on the symbols of the training pattern, the evaluation levels distinguishing and evaluating the plurality of signal levels of the received transmission signal.

In one example, the model values which are initialized and held according to the predetermined conditions may be the first signal levels detected corresponding to the symbols of the training pattern. In another example, the model values which are initialized and held according to the predetermined conditions may be preset fixed values.

The evaluation levels may be set by taking an average between any adjacent model values updated based on the symbols of the training pattern.

In one example, as a result of the comparison of the currently detected signal level against the existing model value based on the symbols of the training pattern, if the currently detected signal level is greater than the existing model value, the existing model value may be updated to a new model value obtained by adding a predetermined amount to the existing model value; and if the currently detected signal level is smaller than the existing model value, the existing model value may be updated to a new model value obtained by subtracting a predetermined amount from the existing model value. In addition, the predetermined amount(0.25 levels) may be set to a value which is always equal to or smaller than a difference (1.00 level) obtained from the comparison.

In another example, as a result of the comparison of the currently detected signal level against the existing model value based on the symbols of the training pattern, if the currently detected signal level is greater than the existing model value, the existing model value may be updated to a new model value obtained by adding to the existing model value an amount which is equal to or smaller than the difference and which is weighted according to the difference; and if the currently detected signal level is smaller than the existing model value, the existing model value may be updated to a new model value obtained by subtracting from the existing model value an amount which is equal to or smaller than the difference and which is weighted according to the difference.

In addition, the plurality of signal levels corresponding to the symbols of the training pattern may be detected by calculating a difference (dd) in signal level between any of the symbols (B (k)) and a previous symbol (B (k-1)); and the evaluation levels may be set for distinguishing and evaluating the plurality of signal levels received, based on a difference in signal level between any of the symbols and a previous symbol.

Further, after the initialization, results of distinguishing the plurality of signal levels corresponding to the symbols of the transmission signal may be outputted by using the evaluation levels. Specifically, data to be transmitted and received may be a signal having a data format defined by MOST (Media Oriented Systems Transport).

For example, the training pattern may be sent with a predetermined header after a lock signal has been sent, the lock signal including a clock component for establishing synchronization with a transmitting end; the plurality of signal levels may be divided into an upper group including relatively high signal levels and a lower group including relatively low signal levels; the training pattern and the lock signal may be such that any of the signal levels selected from the upper group and any of the signal levels selected from the lower group are mapped alternately; and the header may be such that adjacent symbols are mapped to the same signal level. In this case, at the time of the initialization, synchronization may be established with the transmitting end by recovering the clock component of the lock signal; and the header may be detected by detecting, among the signal levels after synchronization is established, adjacent signal levels which are identical to each other. In addition, the training pattern may be sent for a predetermined period of time from when the header is sent out; and the repetition of update of the model values may end when the predetermined period of time from a reception of the header has elapsed.

A data transmission apparatus (1) of the present invention is connected to another data transmission apparatus (1) by a transmission path (80) and is an apparatus for receiving a transmitted transmission signal in which symbols of transmission data are each mapped to any of a plurality of signal levels, the data reception apparatus comprising: a signal level detection section (54) for detecting, at the time of initialization, signal levels from a training pattern corresponding to the symbols, the training pattern being such that the plurality of signal levels of the transmission signal sent from the data transmission apparatus are formed in a known variation pattern; a model value storage section (571) having a plurality of storage means (576) for storing a model value of each of the plurality of signal levels to be received, the model values initialized according to predetermined conditions, stored in their respective storage means, and updated according to a predetermined process; a comparison and update section (574) for repeating a process of comparing a currently detected signal level with an existing model value stored in the storage means based on the symbols of the training pattern and updating the existing model value to a new model value obtained by increasing or decreasing the existing model value by a predetermined amount, depending on whether the currently detected signal level is greater or smaller than the existing model value; an evaluation level value arithmetic section (572) for calculating evaluation levels using the model values updated and stored in the plurality of storage means, the evaluation levels distinguishing and evaluating the plurality of signal levels of the transmission signal received by the data reception apparatus from the data transmission apparatus; and an evaluation level storage section (573) for storing the evaluation levels calculated by the evaluation level value arithmetic section.

In one example, the model values which are initialized and stored in the plurality of storage means according to the predetermined conditions may be the first signal levels detected corresponding to the symbols of the training pattern, by the signal level detection section. In another example, the model values which are initialized and stored in the plurality of storage means according to the predetermined conditions may be preset fixed values.

The evaluation level value arithmetic section may calculate the evaluation levels by taking an average between any adjacent model values updated and stored in the plurality of storage means.

In one example, if the currently detected signal level is greater than the existing model value, the comparison and update section may update, based on the symbols of the training pattern, the existing model value to a new model value obtained by adding a predetermined amount to the existing model value; and if the currently detected signal level is smaller than the existing model value, the comparison and update section may update, based on the symbols of the training pattern, the existing model value to a new model value obtained by subtracting a predetermined amount from the existing model value. Further, the comparison and update section may add to or subtract from the existing model value stored in the storage means the predetermined amount that is set to a value which is always equal to or smaller than a difference obtained from the comparison.

In another example, if the currently detected signal level is greater than the existing model value, the comparison and update section may update, based on the symbols of the training pattern, the existing model value to a new model value obtained by adding to the existing model value an amount which is equal to or smaller than the difference and which is weighted according to the difference; and if the currently detected signal level is smaller than the existing model value, the comparison and update section may update, based on the symbols of the training pattern, the existing model value to a newmodel value obtained by subtracting from the existing model value an amount which is equal to or smaller than the difference and which is weighted according to the difference.

The signal level detection section may detect the plurality of signal levels corresponding to the symbols of the training pattern, by calculating a difference in signal level between any of the symbols and a previous symbol; and the evaluation levels may be set for distinguishing and evaluating the plurality of signal levels received by the data reception apparatus from the data transmission apparatus, based on a difference in signal level between any of the symbols and a previous symbol.

The signal level detection section may further output, when the transmission signal is received through the mapping by the data reception apparatus from the data transmission apparatus, results of distinguishing and evaluating the plurality of signal levels sent from the data transmission apparatus, using the evaluation levels stored in the evaluation level storage section. Specifically, data to be transmitted and received may be a signal having a data format defined by MOST (Media Oriented Systems Transport).

For example, the training pattern may be sent with a predetermined header from the data transmission apparatus after a lock signal has been sent, the lock signal including a clock component for establishing synchronization with the data transmission apparatus; the plurality of signal levels may be divided into an upper group including relatively high signal levels and a lower group including relatively low signal levels; the training pattern and the lock signal may be such that any of the signal levels selected from the upper group and any of the signal levels selected from the lower group are mapped alternately; and the header may be such that adjacent symbols are mapped to the same signal level.

In the above case, the data reception apparatus may further comprise: a conversion section (52) for converting the transmission signal received into a digital signal; a filter (53) for shaping a waveform by removing noise from the digital signal converted in the conversion section; a clock recovery section (50) for establishing synchronization with the data transmission apparatus by recovering the clock component of the lock signal converted into a digital signal in the conversion section; and a reverse mapping section (55), wherein: the signal level detection section may further output, in accordance with clocks whose synchronization is established by the clock recovery section, results of distinguishing and evaluating a plurality of signal levels of the digital signal using the evaluation levels stored in the evaluation level storage section; and the reverse mapping section may decode the symbols of received data which is sent as the transmission signal, by performing a reverse mapping on the evaluation results outputted by the signal level detection section. In addition, the data reception apparatus may further comprise: a header detection section (58) for detecting, at the time of the initialization, the header by detecting, among the signal levels of the digital signal after synchronization is established by the clock recovery section, adjacent signal levels which are identical to each other; and a teacher signal generation section (59) for outputting a teacher signal to the comparison and update section based on timing at which the header is detected by the header detection section and clock timing at which synchronization is established by the clock recovery section, the teacher signal designating any of the storage means to be updated by the comparison and update section. For example, the data transmission apparatus may further comprise a counter, wherein: the training pattern may be sent for a predetermined period of time (fixed length) from when the header is sent out; the counter may count the predetermined period of time; and the comparison and update section may detect the end of the training pattern based on counts by the counter and stop updating the model values stored in the storage means. Further, the reverse mapping section may perform, after the training pattern has been received, a reverse mapping on the evaluation results outputted from the signal level detection section and start decoding the symbols of the received data.

A data transmission system of the present invention has a plurality of data transmission apparatuses (1) connected to each other in a ring by transmission paths, the data transmission apparatuses communicating with each other in one direction, wherein the data transmission apparatuses each comprise: a data transmitting section (64 to 66) for mapping (63) symbols of transmission data to any of a plurality of signal levels and sending a mapped electrical signal to any of the data transmission apparatuses of a subsequent data transmission apparatus; a training pattern transmitting section (67) for sending, at the time of initialization, a training pattern to the subsequent data transmission apparatus, the training pattern being such that the plurality of signal levels of the electrical signal are formed in a known variation pattern; a signal level detection section for detecting signal levels from the electrical signal sent from any of the data transmission apparatuses of a previous data transmission apparatus, corresponding to the symbols, and distinguishing and evaluating the detected signal levels upon data reception; a model value storage section having a plurality of storage means for storing, at the time of the initialization, a model value of each of the plurality of signal levels to be received, the model values initialized according to predetermined conditions, and stored in their respective storage means, and updated according to a predetermined process; a comparison and update section for repeating a process of comparing a currently detected signal level with an existing model value stored in the storage means based on the symbols of the training pattern and updating the existing model value to a newmodel value obtained by increasing or decreasing the existing model value by a predetermined amount, depending on whether the currently detected signal level is greater or smaller than the existing model value; an evaluation level value arithmetic section for calculating evaluation levels using the model values updated and stored in the plurality of storage means, the evaluation levels being used by the signal level detection section for distinguishing and evaluating the plurality of signal levels of the electrical signal upon data reception; and an evaluation level storage section for storing the evaluation levels calculated by the evaluation level value arithmetic section.

In one example, the model values which are initialized and stored in the plurality of storage means according to the predetermined conditions may be the first signal levels detected corresponding to the symbols of the training pattern, by the signal level detection section. In another example, the model values which are initialized and stored in the plurality of storage means according to the predetermined conditions may be preset fixed values.

The evaluation level value arithmetic section may calculate the evaluation levels by taking an average between any adjacent model values updated and stored in the plurality of storage means.

In one example, if the currently detected signal level is greater than the existing model value, the comparison and update section may update, based on the symbols of the training pattern, the existing model value to a new model value obtained by adding a predetermined amount to the existing model value; and if the currently detected signal level is smaller than the existing model value, the comparison and update section may update, based on the symbols of the training pattern, the existing model value to a new model value obtained by subtracting a predetermined amount from the existing model value. Further, the comparison and update section may add to or subtract from the existing model value the predetermined amount that is set to a value which is always equal to or smaller than a difference obtained from the comparison.

In another example, if the currently detected signal level is greater than the existing model value, the comparison and update section may update, based on the symbols of the training pattern, the existing model value to a new model value obtained by adding to the existing model value an amount which is equal to or smaller than the difference and which is weighted according to the difference; and if the currently detected signal level is smaller than the existing model value, the comparison and update section may update, based on the symbols of the training pattern, the existing model value to a new model value obtained by subtracting from the existing model value an amount which is equal to or smaller than the difference and which is weighted according to the difference.

The signal level detection section may detect the plurality of signal levels by calculating a difference in signal level between any of the symbols and a previous symbol; and the evaluation levels may be set for distinguishing and evaluating the plurality of signal levels corresponding to the symbols of the transmission signal sent from the previous data transmission apparatus upon data reception, based on a difference in signal level between any of the symbols and a previous symbol.

The signal level detection section may output, upon the data reception, evaluation results using the evaluation levels stored in the evaluation level storage section. Specifically, data to be transmitted and received may be a signal having a data format defined by MOST (Media Oriented Systems Transport).

For example, the training pattern may be sent with a predetermined header from the previous data transmission apparatus after a lock signal has been sent, the lock signal including a clock component for establishing synchronization with the previous data transmission apparatus; the plurality of signal levels may be divided into an upper group including relatively high signal levels and a lower group including relatively low signal levels; the training pattern and the lock signal may be such that any of the signal levels selected from the upper group and any of the signal levels selected from the lower group are mapped alternately; and the header may be such that adjacent symbols are mapped to the same signal level.

In the above case, the data transmission apparatuses each may further comprise: a conversion section for converting the electrical signal received into a digital signal; a filter for shaping a waveform by removing noise from the digital signal converted in the conversion section; a clock recovery section for establishing synchronization with the previous data transmission apparatus by recovering the clock component of the lock signal; and a reverse mapping section, wherein: the signal level detection section may further output, in accordance with clocks whose synchronization is established by the clock recovery section, results of distinguishing and evaluating a plurality of signal levels of the digital signal using the evaluation levels stored in the evaluation level storage section; and the reverse mapping section may decode the symbols of received data which is sent as the electrical signal, by performing a reverse mapping on the evaluation results outputted by the signal level detection section. In addition, the data transmission apparatuses each may further comprise: a header detection section for detecting, at the time of the initialization, the header by detecting among the signal levels of the digital signal after synchronization is established by the clock recovery section, adjacent signal levels which are identical to each other; and a teacher signal generation section for outputting a teacher signal to the comparison and update section based on timing at which the header is detected by the header detection section and clock timing at which synchronization is established by the clock recovery section, the teacher signal designating any of the storage means to be updated by the comparison and update section. For example, the data transmission apparatuses each may further comprise a counter, wherein: the training pattern may be sent for a predetermined period of time from when the header is sent out; the counter may count the predetermined period of time; and the comparison and update section may detect the end of the training pattern based on counts by the counter and stop updating the model values stored in the storage means. Further, the reverse mapping section may perform, after the training pattern has been received, a reverse mapping on the evaluation results outputted from the signal level detection section and start decoding the symbols of the received data.

According to the data transmission method of the present invention, the evaluation levels to be used for evaluating the signal levels based on the symbols of a transmission waveform which has been subjected to a multivalued mapping before being transmitted are set based on model values which take into account all of the signal levels received in the form of a training pattern at the time of initialization. That is, even if an unexpected noise is added to or a sudden level change is caused in the training pattern and thereby an abrupt fluctuation occurs, the resulting values are not directly set as evaluation levels, but appropriate evaluation levels which capture the overall trend of signal levels are set. Therefore, by evaluating the signal levels based on the symbols of a transmission waveform using the evaluation levels, data evaluation can be performed properly. In addition, the number of devices for holding and comparing model values which are required for setting the evaluation levels can be significantly reduced compared to conventional cases. Thus, appropriate evaluation levels can be set, while reducing the size of the apparatus compared to conventional cases.

Moreover, by holding the first signal levels detected based on the symbols of the training pattern as model values at initialization, values which are close to appropriate model values can be obtained at the time immediately after the start of reception of the training pattern. Furthermore, by holding preset fixed values as model values at initialization, values which are close to intended model values can be obtained at the time immediately after the start of reception of the training pattern.

By updating the model values through increasing or decreasing the model values by a predetermined amount, the configuration of a device for updating can be simplified. In addition, a model value to be updated can be increased or decreased in very small increments or decrements without causing the model value to exceed a received signal level.

By performing addition/subtraction using a numeric value which is weighted according to the difference between an existing model value and a currently detected model value, it is possible to set a model value which is closer to a value which captures the trend of received levels of the training pattern.

Furthermore, by evaluating a received symbol value using a difference value between the received symbol value and its previous symbol value, it is possible to negate an overall signal level change (voltage change) which occurs at the time of transmission from a transmitting end.

When a training pattern is sent with a predetermined header after a lock signal has been sent, and the header is created by mapping the same signal level continuously, the lock signal and the training pattern can be easily distinguished. In addition, the training pattern is sent for a predetermined period of time from when the header is set out, whereby the process of updating a model value can end when the predetermined period of time from the reception of the header has elapsed.

Moreover, the data reception apparatus and data transmission system according to the present invention achieve the same advantageous effects as those described above for the data reception method.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating a configuration of a data transmission system according to one embodiment of the present invention;
FIG. 2 is a functional block diagram illustrating a configuration of a data transmission apparatus 1 of FIG. 1;
FIG. 3 is a diagram illustrating a transition state of an 8-value mapping output performed by the data transmission apparatus 1 at the transmitting end of FIG. 1;
FIG. 4 is a diagram illustrating the 8-value mapping output in difference values;
FIG. 5 is a diagram illustrating an exemplary transmission waveform where previous symbol values B (k-1) are the upper four symbols and symbol values B (k) are mapped to the lower four symbols;
FIG. 6 is a diagram illustrating an exemplary transmission waveform where previous symbol values B (k-1) are the lower four symbols and symbol values B (k) are mapped to the upper four symbols;
FIG. 7 is a diagram illustrating an exemplary transmission waveform of a training signal TS transmitted from the data transmission apparatus 1;
FIG. 8 is a diagram illustrating a first example of a transmission waveform pattern of a lock signal of FIG. 7;
FIG. 9 is a diagram illustrating a second example of a transmission waveform pattern of the lock signal of FIG. 7;
FIG. 10 is a diagram illustrating a third example of a transmission waveform pattern of the lock signal of FIG. 7;
FIG. 11 is a diagram illustrating a fourth example of a transmission waveform pattern of the lock signal of FIG. 7;
FIG. 12 is a block diagram illustrating a configuration of an evaluation level setting section 57 of FIG. 2;
FIG. 13 is a diagram for explaining an evaluation level set in the evaluation level setting section 57 of FIG. 2;
FIG. 14 is a diagram for explaining an evaluation level setting operation performedby the evaluation level setting section 57 using difference values dd of a training pattern;
FIG. 15 is a block diagram illustrating a configuration of a conventional data reception apparatus;
FIG. 16 is a diagram for explaining an evaluation level of the data reception apparatus of FIG. 15;
FIG. 17 is a block diagram illustrating an internal configuration of an evaluation level setting section 107 of FIG. 15; and
FIG. 18 is a diagram for explaining a method of setting the evaluation level of the data reception apparatus of FIG. 15.

### DESCRIPTION OF THE PREFERRED EMBODIMENTS

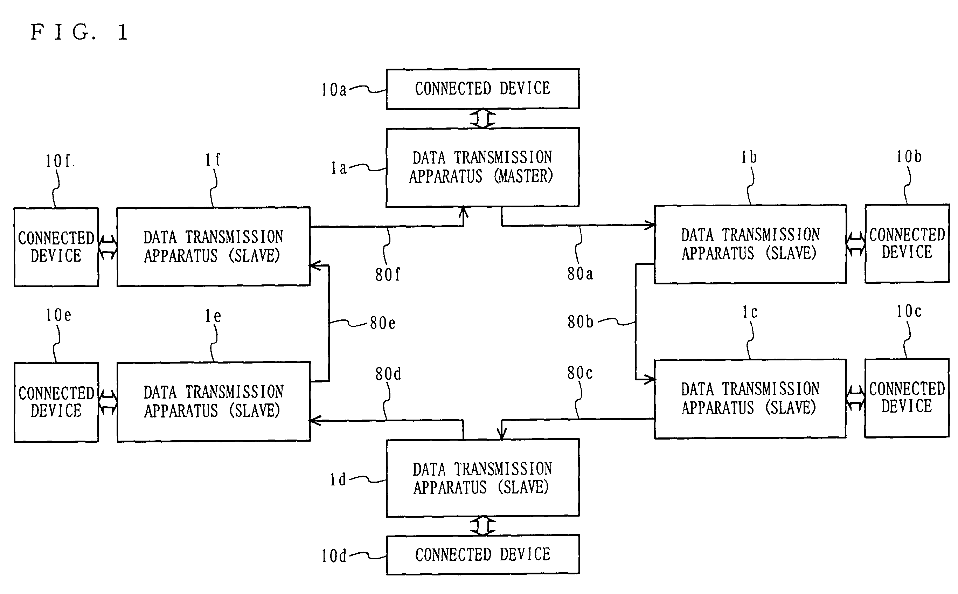

With reference to FIG. 1, a data transmission system according to one embodiment of the present invention is described. The data transmission system includes a plurality of data transmission apparatuses, each having therein a receiving section. This is an exemplary data transmission system to which a data reception apparatus of the present invention is applied. In the case of constructing only a data reception apparatus, the receiving section may be simply provided in the data reception apparatus. FIG. 1 is a block diagram illustrating a configuration of the data transmission system.

In FIG. 1, the data transmission system uses a ring topology as the physical topology to connect a plurality of nodes, thereby forming a one-way ring LAN. As an exemplary data transmission system, a system is described below, in which data transmission apparatuses of six stages 1a to 1f, serving as nodes, are connected to each other in a ring by transmission paths 80a to 80f, respectively, and data is transmitted in one direction through the transmission paths 80a to 80f. The data transmission apparatuses 1a to 1f respectively have devices 10a to 10f connected thereto (e.g., audio devices, navigation devices, and information terminal devices) which perform processing based on data transmitted to the data transmission system and output the results thereof to the data transmission system. In a common hardware configuration, the data transmission apparatuses 1a to 1f and the connected devices 10a to 10f are integrally configured.

In the above-described data transmission system, as an information communication protocol, Media Oriented Systems Transport (hereinafter referred to as "MOST"), for example, may be used. Data to be transmitted using MOST as the communication protocol is transmitted on a frame-by-frame basis and frames are transmitted sequentially in one direction between the data transmission apparatuses 1. That is, the data transmission apparatus 1a outputs data to the data transmission apparatus 1b through the transmission path 80a. The data transmission apparatus 1b outputs data to the data transmission apparatus 1c through the transmission path 80b. The data transmission apparatus 1c outputs data to the data transmission apparatus 1d through the transmission path 80c. The data transmission apparatus 1d outputs data to the data transmission apparatus 1e through the transmission path 80d. The data transmission apparatus 1e outputs data to the data transmission apparatus 1f through the transmission path 80e. The data transmission apparatus 1f outputs data to the data transmission apparatus 1a through the transmission path 80f. As the transmission paths 80a to 80f, inexpensive cables, such as a twisted pair cable and a coaxial cable, are used, and the data transmission apparatuses 1 telecommunicate with each other. At the time when the data transmission system is turned on, the data transmission apparatus 1a serves as a master that sends data with clocks generated thereby, and the data transmission apparatuses 1b to 1f serve as slaves that lock frequencies to the clocks generated by the master.

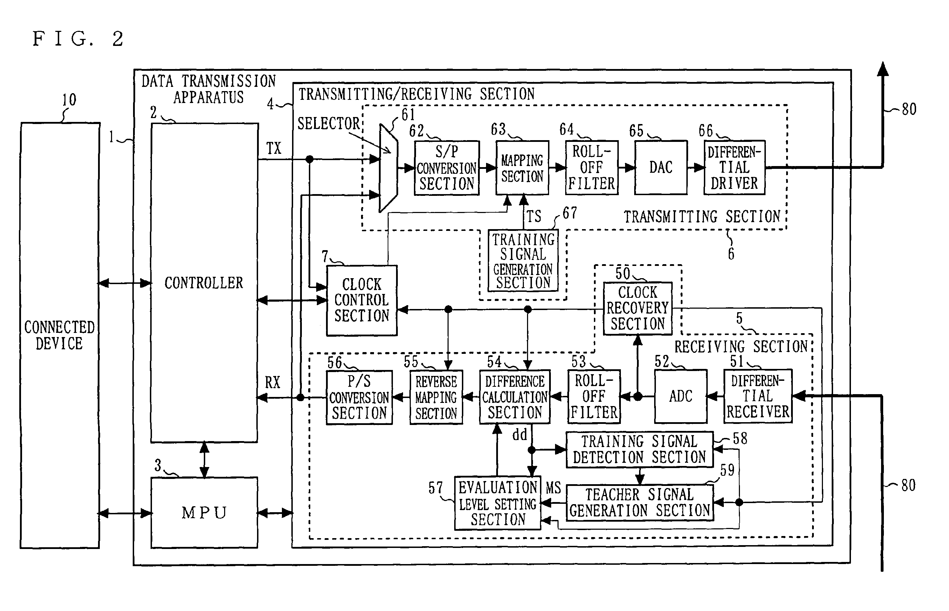

With reference to FIG. 2, the configuration of the data transmission apparatus 1 is described. FIG. 2 is a functional block diagram illustrating a conf iguration of the data transmission apparatus 1. Note that all of the above-described data transmission apparatuses 1a to 1f have the same configuration.

In FIG. 2, the data transmission apparatus 1 includes a controller 2, a micro computer (MPU) 3, and a transmitting/receiving section 4. A description will be made below using MOST as an example of a communication protocol used in the data transmission system.

The controller 2 has a connected device 10 which performs processing based on data transmitted to the data transmission system and outputs the results thereof to the data transmission system. As one of the functions of the controller 2, the controller 2 converts data transmitted from the connected device 10 to a protocol defined by MOST and outputs digital data TX to the transmitting/receiving section 4, and digital data RX outputted from the transmitting/receiving section 4 is inputted to the controller 2 and transmitted to the connected device 10.

The MPU 3 controls the controller 2, the transmitting/receiving section 4, and the connected device 10, in accordance with transmission modes of the data transmission apparatus 1. For example, the MPU 3 controls a reset function, power control (switching to an energy-saving mode),a master/slave selection process, a diag-mode conversion process, a scrambling transmission function, etc., of the data transmission apparatus 1.

The transmitting/receiving section 4 is typically composed of an LSI and has a receiving section 5, a transmitting section 6, and a clock control section 7. The receiving section 5 receives an electrical signal inputted from another data transmission apparatus 1 through a transmission path 80, converts the electrical signal to a digital signal RX, and then outputs it to the controller 2. In addition, the receiving section 5 recovers the clock component included in the electrical signal and outputs it to the clock control section 7. The transmitting section 6 converts a digital data TX outputted from the controller 2 into an electrical signal, in accordance with a clock of the clock control section 7, and then outputs the electrical signal to another data transmission apparatus 1 through a transmission path 80.

The clock control section 7 controls a clock of the data transmission apparatus 1. For example, the clock control section 7 recovers a clock to be used in another data transmission apparatus 1, recovers a clock of the controller 2, or outputs a clock to be used in a signal processing section at the transmitting end. Specifically, if the data transmission apparatus 1 is a master, the clock control section 7 outputs a clock which is recovered in a PLL (Phase Locked Loop) at the transmitting end, and if the data transmission apparatus 1 is a slave, the clock control section 7 outputs a clock which is recovered in a PLL at the receiving end.

The transmitting section 6 includes a selector 61, an S/P (serial/parallel) conversion section 62, a mapping section 63, a roll-off filter 64, a DAC (Digital-Analog Converter) 65, a differential driver 66, and a training signal generation section 67. The S/P conversion section 62, the mapping section 63, and the roll-off filter 64 form a signal processing section at the transmitting end. For simplicity of description, a case is described below where the signal processing section performs an 8-value mapping on digital data, converts the digital data into an analog electrical signal, and then outputs the analog electrical signal. The analog electrical signal will be described in more detail later.

The selector 61 selects data (e.g., digital data TX or RX) to be transmitted from the transmitting section 6, in accordance with a clock which is controlled by the clock control section 7, and then outputs the selected data to the S/P conversion section 62.

In order to perform multivalued transmission, the S/P conversion section 62 converts serial digital data TX outputted from the controller 2 to 2-bit parallel data. The mapping section 63 maps 2-bit parallel data converted in the S/P conversion section 62 or a training signal TS outputted from the training signal generation section 67 (described later) to any of eight-value symbols, in accordance with the above-described clock. The mapping is performed in such a manner that the upper four symbols and the lower four symbols of the eight symbol values are alternately assigned to 2-bit parallel data, so that clock recovery is performed on another data transmission apparatus 1 provided at the receiving end. In addition, the mapping is performed using the difference between the current and previous values, so as to eliminate the influence caused by changes or differences in the direct-current component between transmission and reception.

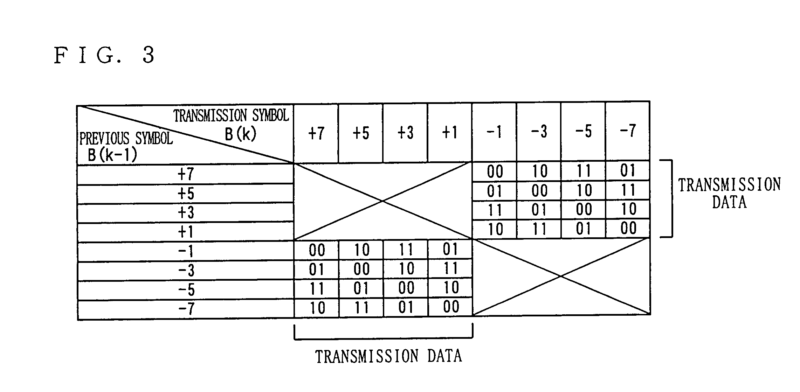

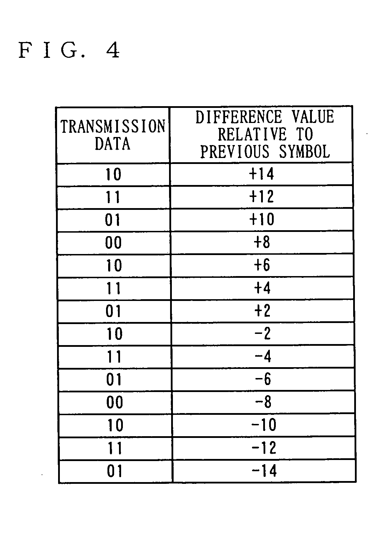

With reference to FIGS. 3 and 4, an exemplary 8-value mapping is described. FIG. 3 is a diagram illustrating a transition state of an 8-value mapping output, and FIG. 4 is a diagram illustrating the 8-value mapping output of FIG. 3 in difference values.

In FIGS. 3 and 4, in an 8-value mapping method, the transmission symbol value is determined (mapped) in accordance with a previous symbol value and the 2-bit parallel data (transmission data), so that data is received without being affected by changes or differences in the direct-current component between the data transmission apparatuses 1. The transmission symbol value is designed so that it is mapped to any of eight signal levels "+7", "+5", "+3", "+1", "-1", "-3", "-5", and "-7". For example, in the case of mapping the transmission data "00" with a previous symbol value B (k-1) of "-1", the transmission symbol value B (k) is "+7" and thus the difference value relative to the previous symbol value is "+8". As shown in FIG. 3, the transmission symbol value B (k) is mapped such that its polarity (positive or negative) is opposite to the polarity of its previous symbol value B (k-1) . In addition, as shown in FIG. 4, a mapping is performed such that the transmission data is uniquely determined based on the difference value relative to the previous symbol value.

Referring back to FIG. 2, the roll-off filter 64 is a waveform shaping filter for limiting the band of an electrical signaltobetransmittedandreducingtheintersymbolinterference. For example, a FIR filter is used in which the sampling frequency is four times the symbol rate, the roll-off factor is 100%, the number of taps is 33, and the number of bits is 12.

The DAC 65 converts a signal, which is band-limited by the roll-off filter 64, to an analog signal. For example, the DAC 65 is a 12-bit D/A converter which is operated at 100 MHz, and outputs an analog signal so that a sine wave, in which the above-described transmission symbol values reach the maximum or minimum amplitude level alternately, can be outputted at the output end of the differential driver 66. The differential driver 66 amplifies the strength of an analog signal outputted from the DAC 65, converts the analog signal to a differential signal, and then sends out the differential signal to the transmission path 80. The differential driver 66 sends an electrical signal to one (positive side) of a pair of leads, which form the transmission path 80, and sends a signal having the opposite polarity to the electrical signal to the other one (negative side) of the pair of leads. Thus, a positive electrical signal and a negative electrical signal are transmitted as a pair to the transmission path 80, whereby changes occurring in the respective electrical signals counteract each other, making it possible to reduce radiation noise from the transmission path 80 and external electrical influences.

The training signal generation section 67 generates a predetermined training signal TS for setting an evaluation level, at the time of initialization (e.g., turn-on of power). The evaluation level serves as the reference for data evaluation between the data transmission apparatus 1 and another data transmission apparatus 1 provided at the receiving end. The training signal TS includes: a clock recovery signal, such as a sine wave, (hereinafter referred to as a "lock signal") for establishing synchronization at the receiving end; a training pattern header which may be represented by maintaining the maximum or minimum amplitude level for a predetermined period of time, for example; and a training pattern which is a known data pattern between data transmission apparatuses 1. The training pattern uses, for example, a PN pattern signal which contains all of the above-described transmission symbol values in various patterns. The training signal TS generated in the training signal generation section 67 is sent out to the mapping section 63.

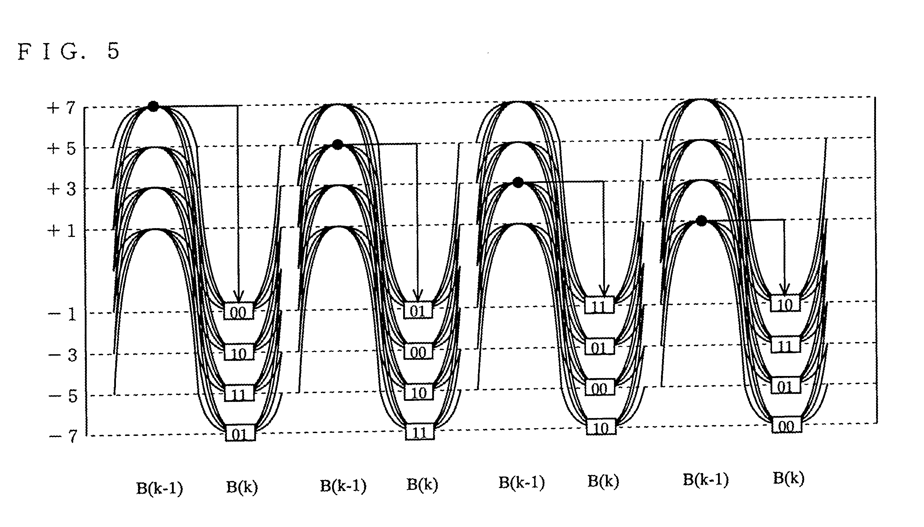

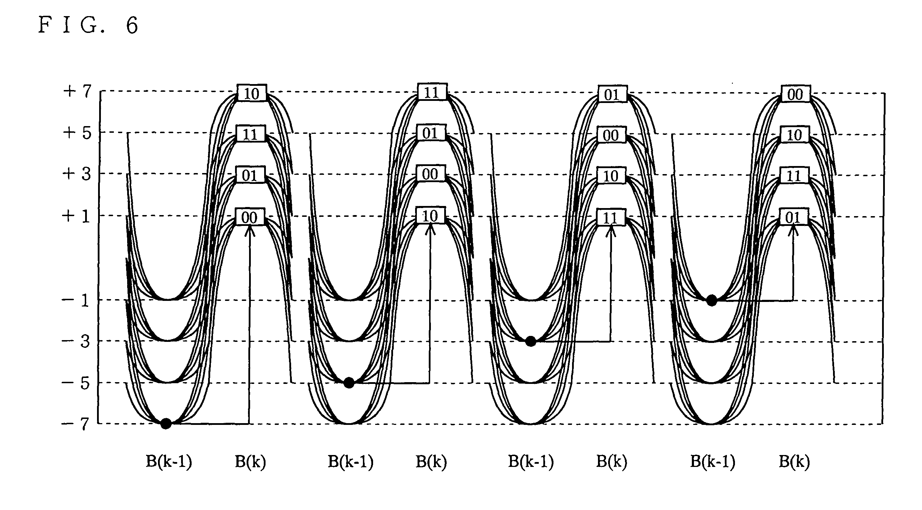

FIGS. 5 and 6 are diagrams illustrating exemplary transmission waveforms which are transmitted from the data transmission apparatus 1 as transmission data. FIG. 5 is a diagram illustrating a transmission waveform where the previous symbol values B (k-1) are the upper four symbols (i.e., "+7", "+5", "+3", and "+1") and the symbol values B (k) are mapped to the lower four symbols (i.e., "-1", "-3", "-5", and "-7"). FIG. 6 is a diagram illustrating a transmission waveform where the previous symbol values B (k-1) are the lower four symbols and the symbol values B (k) are mapped to the upper four symbols. The transmission data to be transmitted from the data transmission apparatus 1 is such a transmission waveform that any of the upper four symbols and any of the lower four symbols are mapped alternately.

In FIG. 5, in the case where the previous symbol value B (k-1) is a symbol "+7", transmission data "00", "10", "11", and "01" are transmitted, respectively for the symbol values B (k) indicating symbols "-1", "-3", "-5", and "-7" (as shown at the far left of FIG. 5) . In the case where the previous symbol value B (k-1) is a symbol "+5", transmission data "01", "00", "10", and "11" are transmitted, respectively for the symbol values B (k) indicating the same symbol values as the above case (as shown in the left center of FIG. 5). In the case where the previous symbol value B (k-1) is a symbol "+3", transmission data "11", "01", "00" , and "10" are transmitted, respectively for the symbol values B (k) indicating the same symbol values as the above case (as shown in the right center of FIG. 5). In the case where the previous symbol value B (k-1) is a symbol "+1", transmission data "10", "11", "01", and "00" are transmitted, respectively for the symbol values B (k) indicating the same symbol values as the above case (as shown at the far right of FIG. 5).

In FIG. 6, in the case where the previous symbol value B (k-1) is a symbol "-7", transmission data "10", "11", "01", and "00" are transmitted, respectively for the symbol values B (k) indicating symbols "+7", "+5", "+3", and "+1" (as shown at the far left of FIG. 6). In the case where the previous symbol value B (k-1) is a symbol "-5", transmission data "11", "01", "00", and "10" are transmitted, respectively for the symbol values B (k) indicating the same symbol values as the above case (as shown in the left center of FIG. 6) . In the case where the previous symbol value B (k-1) is a symbol "-3", transmission data "01", "00" , "10" , and "11" are transmitted, respectively for the symbol values B (k) indicating the same symbol values as the above case (as shown in the right center of FIG. 6). In the case where the previous symbol value B (k-1) is a symbol "-1", transmission data "00", "10", "11", and "01" are transmitted, respectively for the symbol values B (k) indicating the same symbol values as the above case (as shown at the far right of FIG. 6).

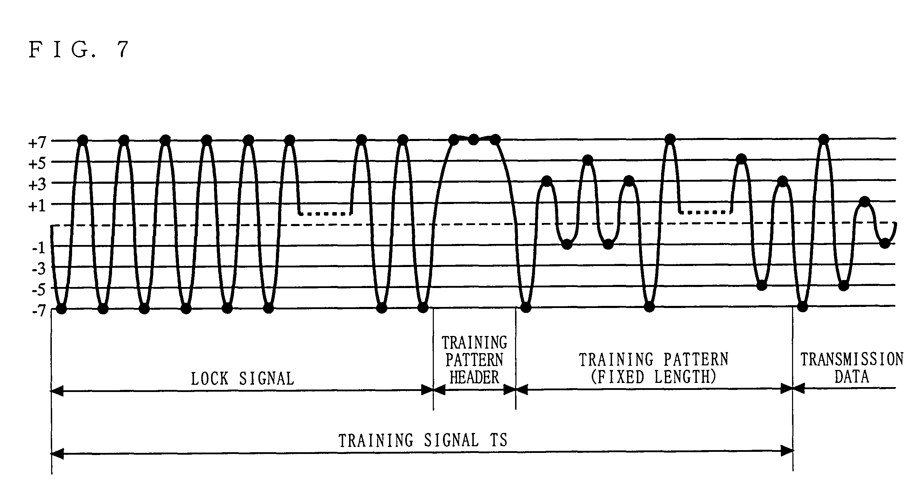

FIG. 7 is a diagram illustrating an exemplary transmission waveform of a training signal TS transmitted from the data transmission apparatus 1. As described above, the training signal TS contains a lock signal, a training pattern header, and a training pattern, which are transmitted in this order.

The lock signal is a signal sent out from the transmitting end so that the receiving end establishes synchronization with the transmitting end. The lock signal has a transmission waveform such that any of the above-described upper four symbols and any of the lower four symbols are mapped alternately. Accordingly, the lock signal contains a fixed frequency component, facilitating clock recovery at the receiving end.

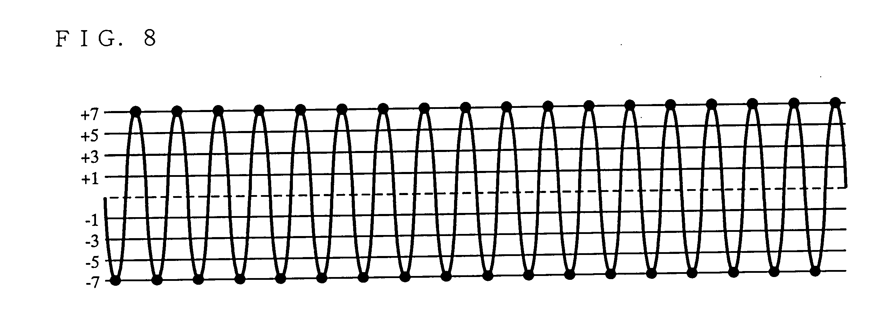

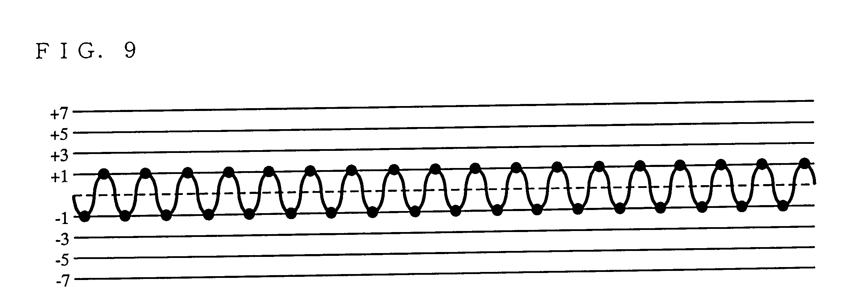

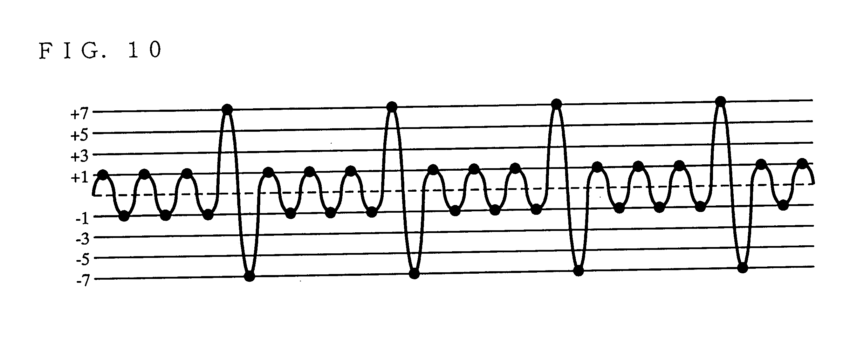

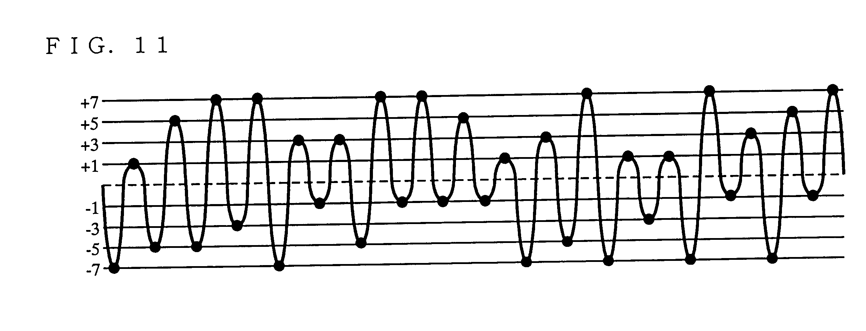

FIGS. 8 to 11 are diagrams illustrating exemplary transmission waveform patterns of the lock signal. In a first example, the lock signal is sent out as a transmission waveform in which the symbol "+7" and the symbol "-7" are mapped alternately (the example of FIG. 8). In this example, the transmission waveform of the lock signal has the maximum amplitude. In a second example, the lock signal is sent out as a transmission waveform in which the symbol "+1" and the symbol "-1" are mapped alternately (the example of FIG. 9). In this example, the transmission waveform of the lock signal has the minimum amplitude. In a third example, the lock signal is sent out as a transmission waveform in which a fixed pattern is repeatedly mapped (the example of FIG. 10). In the lock signal shown in FIG. 10, one period is composed of eight symbols, such that the first to sixths symbols alternately indicate "+1" and "-1" and the seventh and eighth symbols indicate "+7" and "-7", respectively. In a fourth example, the lock signal is sent out as a transmission waveform in which a random pattern is mapped (the example of FIG. 11). In any of the above examples, the lock signal has such a transmission waveform that any of the upper four symbols and any of the lower four symbols are mapped alternately.

Referring back to FIG. 7, the training pattern header is a signal which is added to a training pattern and sent out from the transmitting end after cock synchronization is established at the receiving end. The training pattern header is sent out so as to continue from the lock signal, and is createdby continuously mapping a predetermined symbol (e.g., the symbol "+7" or "-7") for a predetermined period of time. That is, the mapping section 63 performs a special mapping on the training pattern header in such a manner that the transmission signals have the same signal level. The receiving end detects the training pattern header, thereby distinguishing between the lock signal and the training pattern. If the receiving end performs a reverse mapping (described later) on a training pattern header, the difference value approximates 0. For example, the training pattern header shown in FIG. 7 is composed of three symbols and maintains the maximum amplitude level where all of the symbols indicate "+7" and the difference value is 0. Note that the training pattern header may have other transmission waveforms so long as the pattern of the waveform is a non-alternating pattern in which any of the above-described upper four symbols and any of the lower four symbols are not mapped alternately. For example, the training pattern header may have a transmission waveform in which any of the upper four symbols is mapped continuously.

The training pattern has a transmission waveform in which any of the above-described upper four symbols and any of the lower four symbols are mapped alternately. Specifically, the training pattern is, for example, a pattern obtained by mapping PN data which contains all of the above-described transmission symbol values in various patterns, according to the above-described mapping table. By arranging the PN data in a predetermined data series, the receiving end can emulate a training pattern, whereby the evaluation level can be set surely and easily using pseudo-random data (PN data). The training pattern preferably has a fixed length (i.e., the training pattern ends when a predetermined period of time from the send-out of the training pattern header has elapsed) . Note that the training pattern may have a variable length and a signal for indicating the end of the training pattern may be added to the training pattern.

After the training pattern has been sent out, without a pause, transmission of data which is mapped according to the above-described mapping table begins. The receiving end receives the transmission data after receiving the entire training signal TS. Using such a training signal allows the receiving end to establish clock synchronization and to set amultivalued evaluation level, at the time of initialization . The receiving end evaluates the signal level of the transmission data based on a multivalued evaluation level and performs a reverse mapping on the evaluation result, whereby data recovery can be achieved.

Referring back to FIG. 2, the receiving section 5 includes a clock recovery section 50, a differential receiver 51, an ADC (Analog-Digital Converter) 52, a roll-off filter 53, a difference calculation section 54, a reverse mapping section 55, a P/S (parallel/serial) conversion section 56, an evaluation level setting section 57, a training signal detection section 58, and a teacher signal generation section 59. The roll-off filter 53, the difference calculation section 54, the reverse mapping section 55, and the P/S conversion section 56 form a signal processing section at the receiving end.

The differential receiver 51 converts a differential signal inputted through a transmission path 80 to a voltage signal, and then outputs the voltage signal to the ADC 52. Since, as described above, a positive electrical signal and a negative electrical signal are transmitted as a pair over a pair of leads forming the transmission path 80, the differential receiver 51 determines a signal by the difference between the positive and negative electrical signals, making the signals immune to external electrical influences. The ADC 52 converts a voltage signal outputted from the differential receiver 51 to a digital signal.

The roll-off filter 53 is a waveform shaping FIR filter for removing noise from a digital signal outputted from the ADC 52. For example, a FIR filter is used in which the sampling frequency is 16 times the symbol rate. Combination of the roll-off filter 53 and the aforementioned roll-off filter 64 at the transmitting end realizes roll-off characteristics with no intersymbol interference. The difference calculation section 54 calculates the difference value between a received symbol value outputted from the roll-off filter 53 and a previous symbol value, based on data symbol timing detected in the clock recovery section 50, as will be described later. The difference calculation section 54 then performs data evaluation on each difference value based on an evaluation level set in the evaluation level setting section 57, and outputs the resulting evaluation value to the reverse mapping section 55. By thus evaluating a received symbol value using the difference value between the received symbol value and a previous symbol value, it is possible to negate an overall voltage change which occurs at the time of transmission to a data transmission apparatus 1 at the receiving end from a data transmission apparatus 1 at the transmitting end.

The reverse mapping section 55 decodes the above-described evaluation values into the data before it was mapped in the mapping section 63 at the transmitting end, based on data symbol timing detected in the clock recovery section 50. By this reverse mapping performed in the reverse mapping section 55, the evaluation values are converted into parallel data. The P/S conversion section 56 converts parallel data, which has been converted in the reverse mapping section 55, to serial digital data RX and then outputs the serial digital data RX to the controller 2.

The clock recovery section 50 recovers the clock component of a signal, which is received through the transmission path 80 and outputted from the ADC 52, to perform clock recovery on the transmission path and detects data symbol timing which is the maximum or minimum point of the above-described transmission waveform. The clock which has been recovered in the clock recovery section 50 is used as a clock for the signal processing section at the receiving end. In addition, the clock which has been recovered in the clock recovery section 50 is outputted to the clock control section 7 and used as a reference clock input for the PLL at the receiving end.

To a difference value dd calculated in the difference calculation section 54, the evaluation level setting section 57 sets an evaluation level for evaluating the threshold of the difference value dd. The training signal detection section 58 detects the training pattern header and training pattern of a training signal TS transmitted from another data transmission apparatus 1. The teacher signal generation section 59 outputs, when the training signal detection section 58 has detected the training pattern header and training pattern of a training signal TS, to the evaluation level setting section 57 a teacher signal MS which has the same data pattern as the training pattern and is synchronized with the training pattern. These operations will be described in detail later.

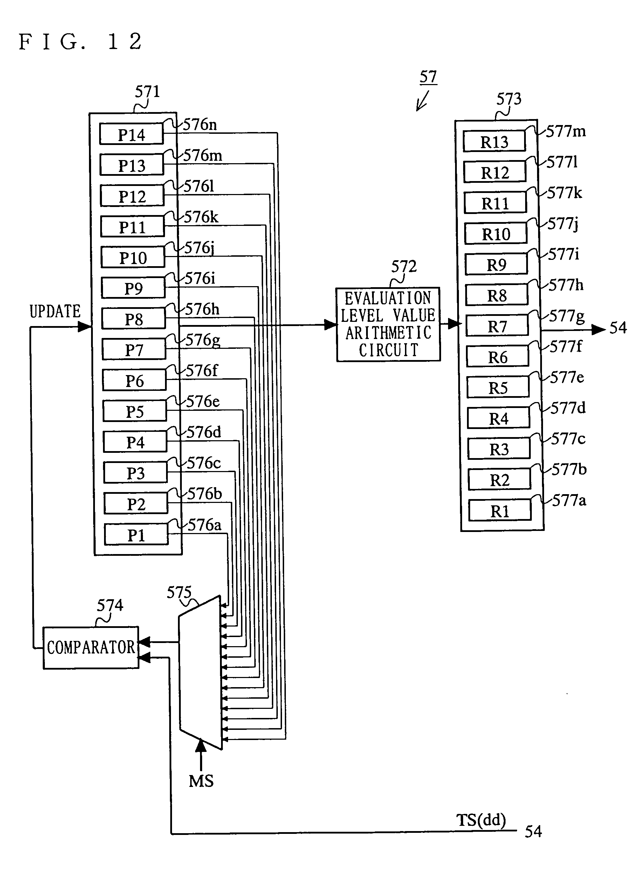

With reference to FIG. 12, the structure of the evaluation level setting section 57 is described. FIG. 12 is a block diagram illustrating a configuration of the evaluation level setting section 57.

In FIG. 12, the evaluation level setting section 57 includes a model value storage section 571, an evaluation level value arithmetic circuit 572, an evaluation level storage section 573, a comparator 574, and a selector 575. The model value storage section 571 has registers 576a to 576n, each holding a model value of each difference value in a training pattern which is calculated in the difference calculation section 54. The registers 576a to 576n are connected to the selector 575. The selector 575 outputs to the comparator 574 a model value held in the model value storage section 571 which corresponds to a difference value in the currently-input training pattern, in response to a teacher signal MS outputted from the teacher signal generation section 59. The comparator 574 compares the difference value in the currently-input training pattern against its corresponding model value held in the model value storage section 571. The comparator 574 then performs a predetermined calculation (described later) on the above model value and updates any of the registers 576a to 576n in the model value storage section 571 that holds the model value to the calculated model value.

The evaluation level value arithmetic circuit 572 calculates each evaluation level between adjacent model values using each model value held in the model value storage section 571, and then outputs the evaluation levels to the evaluation level storage section 573. Specifically, the evaluation level value arithmetic circuit 572 calculates an evaluation level between adjacent model values by taking an average between the adjacent model values. The evaluation level storage section 573 has registers 577a to 577m, each holding the above-described evaluation level which is based on a value existing between adjacent model values.

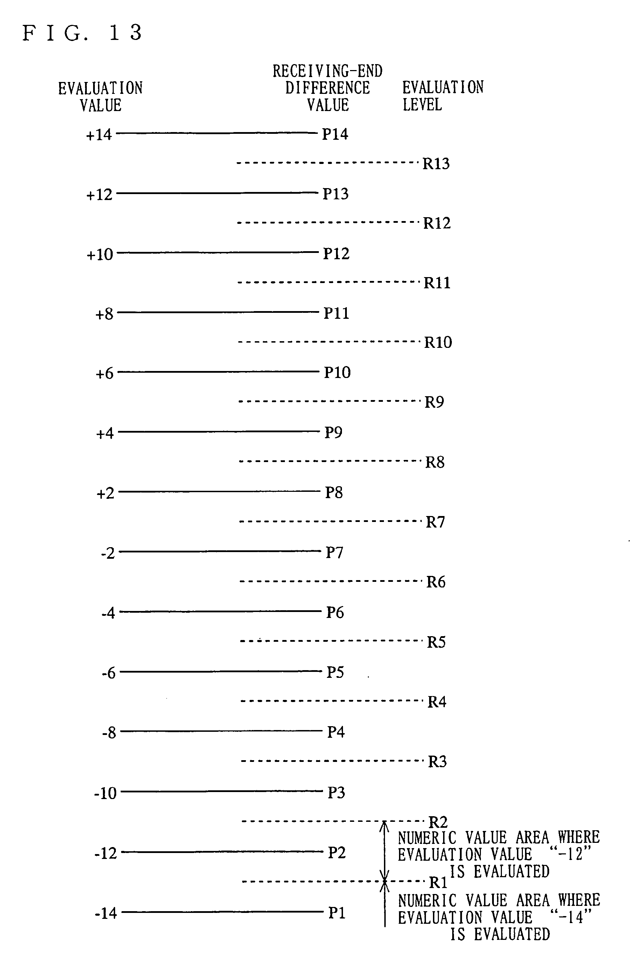

With reference to FIG. 13, an example for the evaluation level and evaluation value set in the evaluation level setting section 57 and the difference value calculated in the difference calculation section 54 is described. FIG. 13 is a diagram for explaining the evaluation level set in the evaluation level setting section 57.

As described above, in the case of performing an 8-value mapping, a data transmission apparatus 1 at the transmitting end maps data symbols to eight signal levels (see FIGS. 3 to 6). Specifically, the data symbol is designed so that it is mapped to any of eight signal levels (transmission symbol values) "+7", "+5", "+3", "+1", "-1", "-3", "-5", and "-7". The transmission symbol value is mapped so that its polarity is opposite to the polarity of a previous symbol value, and that the transmission data is uniquely determined based on the difference value relative to the previous symbol value. Specifically, there are 14 types of difference values which are, in order of ascending values, "-14", "-12", "-10", "-8", "-6", "-4", "-2", "+2", "+4", "+6", "+8", "+10", "+12", and "+14". These are transmitting-end difference values which are to be mapped in a data transmission apparatus 1 at the transmitting end. That is, it is unlikely that a transmission waveform received by a data transmission apparatus 1 at the receiving end holds the above-described difference values properly. Therefore, the data transmission apparatus 1 at the receiving end needs to evaluate the association between receiving-end difference values received and calculated and transmitting-end difference values. The resulting evaluated result is an evaluation value, and the evaluation value indicates any of the above-described 14 types of difference values at the transmitting end.

In FIG. 13, the evaluation level setting section 57 treats the receiving-end difference values as P1 to P14 in order of ascending value. The evaluation level setting section 57 sets evaluation levels R1 to R13 between adjacent difference values P1 to P14, respectively. The evaluation levels R1 to R13 are numeric values which serve as evaluation boundaries upon evaluation of the evaluation values. For example, an evaluation level "R1" is set between receiving-end difference values P1 and P2, and serves as an evaluation boundary between evaluation values "-14" and "-12" which correspond to the receiving-end difference values P1 and P2. An evaluation level R2 is set between receiving-end difference values P2 and P3, and serves as an evaluation boundary between evaluation values "-12" and "-10" which correspond to the receiving-end difference values P2 and P3. The evaluation levels R3 to R13 are set in a like manner. If the calculated difference value is smaller than the evaluation level R1, the difference calculation section 54 (see FIG. 2) outputs the evaluation value "-14" to the reverse mapping section 55. If the calculated difference value is greater than the evaluation level R1 and smaller than the evaluation level R2, the difference calculation section 54 outputs the evaluation value "-12" to the reverse mapping section 55. The difference calculation section 54 thus compares the calculated difference value against any of the evaluation levels R1 to R13 set in the evaluation level setting section 57, and outputs to the reverse mapping section 55 an evaluation value which corresponds to a numeric value area of the comparison result.

In order to evaluate the evaluation value, a data transmission apparatus 1 sets evaluation levels before data transmission is performed between the transmitting end and the receiving end. Upon setting of the evaluation level, a training signal TS is sent from a data transmission apparatus 1 at the transmitting end. As described above, the training signal TS contains a lock signal, a training pattern header, and a training pattern. The training pattern is a known data pattern (a pattern based on PN data) between data transmission apparatuses 1, and uses, for example, a PN pattern signal which contains all of the above-described transmission symbol values. The data transmission apparatus 1 at the transmitting end outputs the training signal TS upon turn-on of power, for example.

When the data transmission apparatus 1 at the receiving end receives a lock signal of the training signal TS, the clock recovery section 50 performs clock recovery and detects data symbol timing which is the maximum or minimum point of the lock signal. The data symbol timing is used in subsequent processes as a clock for the evaluation level setting section 57, the training signal detection section 58, and the teacher signal generation section 59.

Subsequently, the training signal detection section 58 of the data transmission apparatus 1 at the receiving end detects a training pattern header received subsequent to the lock signal. The training signal detection section 58 detects a training pattern header by detecting a portion where the difference value dd calculated in the difference calculation section 54 is such that dd ≒ 0. For example, in the case where the training signal TS illustrated in FIG. 7 is received, the difference calculation section 54 sends out twice a calculation result such that the difference value dd ≒ 0, with respect to the training pattern header where all of the three symbols indicate "+7". The training signal detection section 58 detects the difference value dd which is ≒ 0 sent out from the difference calculation section 54. Then, the evaluation level setting section 57 and the teacher signal generation section 59 start the evaluation level setting using a training pattern of the training signal TS received subsequent to the training pattern header.

Specifically, when a training signal TS is inputted, the difference calculation section 54 calculates the difference of a received symbol value with respect to a previous symbol value based on data symbol timing which is notified by the clock recovery section 50, and then outputs the calculation result, as a receiving-end difference value dd, to the evaluation level setting section 57 and the training signal detection section 58. The training pattern header contained in the training signal TS has a pattern in which the maximum or minimum amplitude level is maintained for a predetermined period of time, for example, and thus the difference value dd indicates a predetermined time "0". In this case, the training signal detection section 58 detects a period during which the difference value dd outputted from the difference calculation section 54 is "0", thereby detecting the input of the training pattern header of the training signal TS. The training pattern of the training signal TS uses, for example, a signal which is based on predetermined PN data which contains all of the above-described transmission symbol values. Therefore, the difference value dd which is calculated by the difference calculation section 54 using the training pattern contains all of the possible difference values received by the data transmission apparatus 1 at the receiving end. The training pattern is a known data pattern between data transmission apparatuses 1. The teacher signal generation section 59 outputs a teacher signal MS to the evaluation level setting section 57 based on data symbol timing notified by the clock recovery section 50. The teacher signal MS indicates which difference value dd of the currently-input training pattern represents which transmitting-end difference value, based on the notification of detection of the training pattern header by the training signal detection section 58.

In the case where the training pattern header has a non-alternating pattern in which any of the upper four symbols and any of the lower four symbols are not mapped alternately, the training signal detection section 58 may detect the training pattern header by detecting the non-alternating pattern (for example, any of the upper four symbols is mapped continuously).

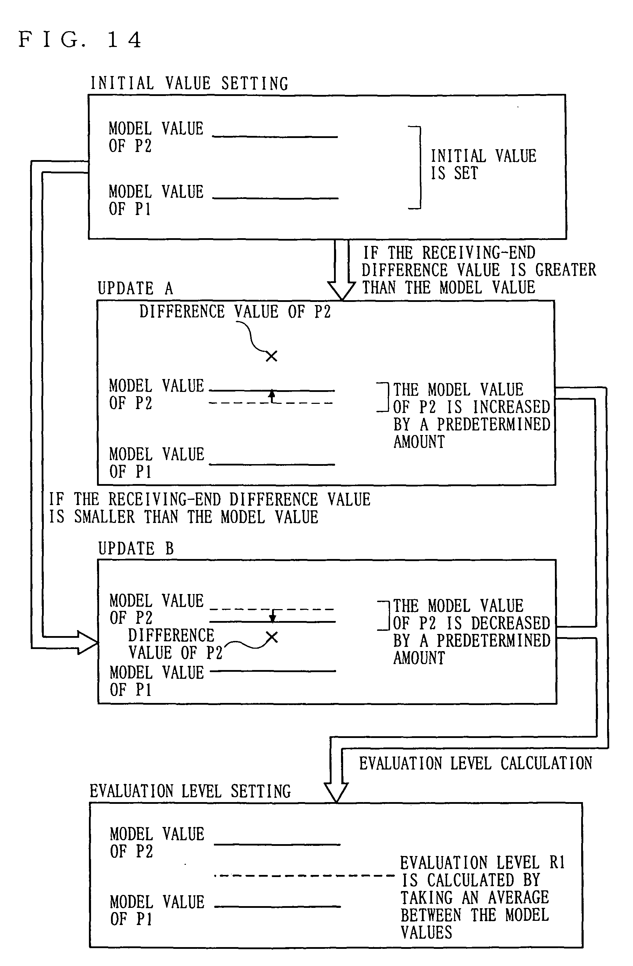

With reference to FIGS. 12 and 14, an evaluation level setting operation performedby the evaluation level setting section 57 using the difference value dd of the training pattern is described. The difference value dd of a training pattern outputted from the difference calculation section 54 is inputted to the comparator 574. A teacher signal MS outputted from the teacher signal generation section 59 is inputted to the selector 575. The selector 575 selects any of the registers 576a to 576n based on a difference value notified by the teacher signal MS, and outputs the data stored in the selected register to the comparator 574.

The comparator 574 allows, if the inputted difference value dd is the first to be inputted, the selected register to store the difference value dd as a model value to be received. This process is performed on each of the registers 576a to 576n, whereby the initial value of the model value of each of the difference values P1 to P14 at the receiving end to be stored in the registers 576a to 576n is set (i.e., the state of initial value setting illustrated in FIG. 14).

After the initial value setting, the comparator 574 compares a difference value dd outputted from the difference calculation section 54 against a model value of the difference value dd outputted from the selector 575. If the difference value dd is greater than the model value, the comparator 574 updates the currently-selected register to a new model value obtained by adding a predetermined numeric value to the model value (i.e., the state of update A illustrated in FIG. 14). If the difference value dd is smaller than the model value, the comparator 574 updates the currently-selected register to a new model value obtained by subtracting a predetermined numeric value from the model value (i.e., the state of update B illustrated in FIG. 14). If the difference value dd is equal to the model value, the comparator 574 updates the currently-selected register to the same model value (i.e., the model value is not changed).

For example, in the case where a difference value P2 of a training pattern is inputted to the comparator 574, the selector 575 selects a register 576b in response to a teacher signal MS and outputs to the comparator 574 a model value of the difference value P2 stored in the register 576b. If the difference value P2 is greater than the model value of the difference value P2, the comparator 574 updates the register 576b to a new model value obtained by adding a predetermined numeric value to the model value of the difference value P2 (i.e., the state of update A illustrated in FIG. 14). If the difference value P2 is smaller than the model value of the difference value P2, the comparator 574 updates the register 576b to a new model value obtained by subtracting a predetermined numeric value from the model value of the difference value P2 (i.e., the state of update B illustrated in FIG. 14). The predetermined numeric value which the comparator 574 adds to or subtracts from a model value will be described later.

Such an update is repeatedly performed on all of the registers 576a to 576n, whereby the model value of each of the difference values P1 to P14 at the receiving end to be stored in the registers 576a to 576n is finally set. As described above, the training pattern of the training signal TS has a fixed length, and therefore the update is completed in accordance with the count of a counter (not shown) included in the evaluation level setting section 57. In one example, the counter counts the time from the reception of a training pattern header until the reception of a training pattern with a fixed length is complete. The teacher signal generation section 59 then stops the output of a teacher signal MS and the update of the registers 576a to 576n by the comparator 574 is complete, whereby the model value of each of the difference values P1 to P14 at the receiving end is set. In the case where the training pattern has a variable length and a signal for indicating the end of the training pattern is added to the training pattern, the update may be completed in such a manner that the training signal detection section 58 detects the signal for indicating the end of the training pattern.

The evaluation level value arithmetic circuit 572 calculates evaluation levels R1 to R13 using the model values of the difference values P1 to P14 at the receiving end which are set in the registers 576a to 576n of the model value storage section 571. The evaluation level value arithmetic circuit 572 calculates the evaluation levels between adjacent model values by taking an average between the model values. For example, in the case of calculating the evaluation level R1 between the evaluation levels "-14" and "-12", the evaluation level value arithmetic circuit 572 takes an average between the model values of the difference values P1 and P2 stored in the registers 576a and 576b, respectively (i.e. , the state of evaluation level setting illustrated in FIG. 14). The evaluation level value arithmetic circuit 572 then stores the calculated evaluation levels R1 to R13 respectively to the registers 577a to 577m of the evaluation level storage section 573. Thus, the evaluation level setting process by the evaluation level setting section 57 is completed and data transmission between data transmission apparatuses 1 starts.

In the above description, the evaluation levels are set to the registers 577a to 577m by taking an average between adjacent model values; however, the evaluation levels may be set by multiplying a model value adjacent to an evaluation level to be set by a predetermined numeric value. For example, in the case of calculating the evaluation level R3 between the evaluation values "-10" and "-8", the model value of the difference value P3 stored in the register 576c may be multiplied by a predetermined numeric value (e.g., 0.9).

The model values stored in the model value storage section 571 are set in accordance with the results which take into account all of the difference values dd received by means of the training pattern. That is, even if an unexpected noise is added to or a sudden level change is caused in the training pattern and thereby an abrupt fluctuation occurs, the resulting values are not directly set as model values, but appropriate model values are set to the difference values P1 to P14 so as to capture the overall trend of difference values. In addition, since the evaluation levels R1 to R13 are calculated using the appropriate model values, data evaluation in data transmission can be appropriately performed using the evaluation levels R1 to R13.

Next, a specific example is described that relates to the predetermined numeric value which the evaluation level setting section 57 adds to or subtracts from a model value. For example, the difference value dd which is outputted by the difference calculation section 54 is expressed such that 1 bit of sign (+ or -) is added to 10 bits (0 to 1023) of the absolute value of the difference value dd. In this case, the difference value dd takes values of 2047 levels, ranging from -1023 to +1023. It is preferable that the predetermined numeric value be set to a value which is always equal to or smaller than the difference between a difference value dd and a model value. If the predetermined numeric value were set to a value greater than the difference between a difference value dd and a model value, the model value would be updated to a value greater than the difference between the actual difference value dd and a model value. As a result, appropriate model values which capture the overall trend of difference values would not be set. Therefore, in order to set the predetermined numeric value to a value which is always equal to or smaller than the above-described difference, it is preferable that the predetermined numeric value be set to a value equal to or smaller than the unit level of a difference value dd (e.g., 0.25 levels in the case of 2047 levels of a difference value dd).

In order to be able to handle the predetermined numeric value (0.25 levels), the evaluation level setting section 57 extends the absolute value of the difference value dd to 12 bits and also extends the absolute value of a model value to 12 bits. Using the extended lower 2 bits, levels with decimal points (0.00, 0.25, 0.50, and 0.75) are treated. If the difference value dd is greater than a model value, the model value is increased by "1" in the above 12 bits (i.e., 0.25 levels) , and if the difference value dd is smaller than a model value, the model value is decreased by 1. By this, the addition/subtraction of 0.25 levels can be performed. Since the amount (0.25 levels) by which the model value is increased or decreased is smaller than the value of one level (1.00 level) of the difference value dd, the model value can be increased or decreased in very small increments or decrements without causing the model value to be updated to a value exceeding a received difference value dd.

In the above description, the predetermined numeric value is a fixed value, but it may be other than a fixed value. For example, the predetermined numeric value may be a numeric value which is weighted according to the difference between a difference value dd and a model value (i.e. , the greater the difference, the greater numeric value is to be added or subtracted). Even if addition or subtraction is performed using a weighted numeric value, the model values can be set to appropriate values.

At the time of data transmission, the difference calculation section 54 calculates the difference value between a received symbol value outputted from the roll-off filter 53 and a previous symbol value, performs data evaluation on each difference value using the evaluation levels R1 to R13 set in the evaluation level setting section 57, as described above, and then outputs the resulting evaluation values to the reverse mapping section 55. For example, in the case where the difference value is between the evaluation levels R1 and R2, the difference calculation section 54 outputs an evaluation value "-12" to the reverse mapping section 55. The reverse mapping section 55 is able to properly decode the evaluation values back into parallel data before it is mapped in the mapping section 63 at the transmitting end, using a correspondence which is the reverse of a correspondence between transmission data and transmitting-end difference values relative to previous symbols (see FIG. 4).

As described above, in a data transmission apparatus of the present embodiment, the evaluation levels for evaluating the symbol values of a transmission waveform which is subjected to a multivalued mapping and telecommunicated, are set based on the results which take into account all of the difference values received bymeans of a training pattern at the time of initialization. That is, even if an unexpected noise is added to or a sudden level change is caused in the training pattern and thereby an abrupt fluctuation occurs, the resulting values are not directly set as evaluation levels, but appropriate evaluation levels which capture the overall trend of difference values are set. Therefore, when the symbol values for data transmission are evaluated using the evaluation levels, a proper data evaluation can be performed.

Furthermore, the number of registers required to set the evaluation levels of the present embodiment can be significantly reduced compared to conventional cases. Specifically, in the model value storage section and the evaluation level storage section of the present embodiment, the same number of registers are provided as the number of model values and evaluation levels to be set. On the other hand, a conventional maximum/minimum signal level storage section requires registers whose number is twice the number of signal levels to be set. The number of registers included in a conventional maximum/minimum signal level storage section illustrated in FIG. 17 is set according to the number of signal levels , and therefore the effect of reduction in number is small compared to the number of registers included in the model value storage section of the present embodiment illustrate in FIG. 12. In the case where an evaluation is performed by a conventional method using difference values, the number of registers required is twice the number of registers included in the model value storage section of the present embodiment. Further, the number of comparators and selectors required to set the evaluation levels of the present embodiment results in half the number required in conventional cases. That is, the size of the circuit of the present embodiment can be reduced compared to conventional cases, and appropriate evaluation levels can be set.

In the above description, the initial value of a model value to be set in each of the registers 576a to 576n is set using a difference value dd which is the first input into the comparator 574; however, the initial value of a model value may be a preset fixed value. In this case, the difference value dd which is the first input into the comparator 574 is also processed in the same manner as those difference values dd which are inputted after the first input.

In the present embodiment, transmission is performed with an 8-value mapping, but the present invention is not limited thereto. For example, the present invention can also be appropriately applied to the case where transmission is performed with a 4-value mapping. In addition, in the present embodiment, a data evaluation is performed using a difference value with respect to a previous symbol value, but the present invention can also be appropriately applied to the case where a data evaluation is performed by evaluating a symbol value itself.

While the invention has been described in detail, the foregoing description is in all aspects illustrative and not restrictive. It is understood that numerous other modifications and variations can be devised without departing from the scope of the invention.

## Claims

1. A data reception method for receiving a transmitted transmission signal in which symbols of transmission data are each mapped to any of a plurality of signal levels , the method comprising at the time of initialization:
detecting signal levels from a training pattern corresponding to the symbols, the training pattern being such that the plurality of signal levels of the transmission signal are sent in a known variation pattern;
initializing a model value (P1 to P14) of each of the plurality of signal levels to be received according to predetermined conditions, and holding the model values;
repeating a process of comparing a currently detected signal level with an existing model value (P1 to P14) based on the symbols of the training pattern and updating the existing model value (P1 to P14) to a new model value (P1 to P14) obtained by increasing or decreasing the existing model value (P1 to P14) by a predetermined amount, depending on whether the currently detected signal level is greater or smaller than the existing model value; and
setting evaluation levels (R1 to R13) using the model values (P1 to P14) updated based on the symbols of the training pattern, the evaluation levels distinguishing and evaluating the plurality of signal levels of the received transmission signal.

2. The data reception method according to claim 1, wherein the model values (P1 to P14) which are initialized and held according to the predetermined conditions are the first signal levels detected corresponding to the symbols of the training pattern.

3. The data reception method according to claim 1, wherein the model values (P1 to P14) which are initialized and held according to the predetermined conditions are preset fixed values.

4. The data reception method according to claim 1, wherein the evaluation levels (R1 to R13) are set by taking an average between any adjacent model values (P1 to P14) updated based on the symbols of the training pattern.

5. The data reception method according to claim 1, wherein:
as a result of the comparison of the currently detected signal level against the existing model value (P1 to P14) based on the symbols of the training pattern, if the currently detected signal level is greater than the existing model value (P1 to P14) , the existing model value (P1 to P14) is updated to a new model value (P1 to P14) obtained by adding a predetermined amount to the existing model value (P1 to P14); and
if the currently detected signal level is smaller than the existing model value (P1 to P14), the existing model value (P1 to P14) is updated to a new model value obtained by subtracting a predetermined amount from the existing model value (P1 to P14) .

6. The data reception method according to claim 5, wherein the predetermined amount is set to a value which is always equal to or smaller than a difference obtained from the comparison.

7. The data reception method according to claim 1, wherein:
as a result of the comparison of the currently detected signal level against the existing model value (P1 to P14) based on the symbols of the training pattern, if the currently detected signal level is greater than the existing model value (P1 to P14), the existing model value (P1 to P14) is updated to a new model value (P1 to P14) obtained by adding to the existing model value (P1 to P14) an amount which is equal to or smaller than the difference and which is weighted according to the difference; and
if the currently detected signal level is smaller than the existing model value (P1 to P14), the existing model value (P1 to P14) is updated to a new model value obtained by subtracting from the existing model value (P1 to P14) an amount which is equal to or smaller than the difference and which is weighted according to the difference.

8. The data reception method according to claim 5, wherein:
the plurality of signal levels corresponding to the symbols of the training pattern are detected by calculating a difference (dd) in signal level between any of the symbols (B (k) ) and a previous symbol (B (k-1)); and
the evaluation levels (R1 to R13) are set for distinguishing and evaluating the plurality of signal levels received, based on a difference (dd) in signal level between any of the symbols (B (k)) and a previous symbol (B (k-1)).

9. The data reception method according to claim 8, further comprising, after the initialization, outputting results of distinguishing the plurality of signal levels corresponding to the symbols of the transmission signal, by using the evaluation levels (R1 to R13).

10. The data reception method according to claim 9, wherein data to be transmitted and received is a signal having a data format defined by MOST (Media Oriented Systems Transport) .

11. The data reception method according to claim 1, wherein:
the training pattern is sent with a predetermined header after a lock signal has been sent, the lock signal including a clock component for establishing synchronization with a transmitting end;
the plurality of signal levels are divided into an upper group including relatively high signal levels and a lower group including relatively low signal levels;
the training pattern and the lock signal are such that any of the signal levels selected from the upper group and any of the signal levels selected from the lower group are mapped alternately; and
the header is such that adjacent symbols are mapped to the same signal level.

12. The data reception method according to claim 11, further comprising at the time of the initialization:
establishing synchronization with the transmitting end by recovering the clock component of the lock signal; and
detecting the header by detecting, among the signal levels after synchronization is established, adjacent signal levels which are identical to each other.

13. The data reception method according to claim 11, wherein:
the training pattern is sent for a predetermined period of time from when the header is sent out; and
the repetition of update of the model values (P1 to P14) ends when the predetermined period of time from a reception of the header has elapsed.

14. A data reception apparatus (5) connected to a data transmission apparatus (1) by a transmission path (80), for receiving a transmitted transmission signal in which symbols of transmission data are each mapped to any of a plurality of signal levels, the data reception apparatus comprising:
a signal level detection section (54) for detecting, at the time of initialization, signal levels from a training pattern corresponding to the symbols, the training pattern being such that the plurality of signal levels of the transmission signal sent from the data transmission apparatus (1) are formed in a known variation pattern;
a model value storage section (571) having a plurality of storage means (576) for storing a model value (P1 to P14) of each of the plurality of signal levels to be received, the model values initialized according to predetermined conditions, stored in their respective storage means, and updated according to a predetermined process;
a comparison and update section (574) for repeating a process of comparing a currently detected signal level with an existing model value (P1 to P14) stored in the storage means (576) based on the symbols of the training pattern and updating the existing model value (P1 to P14) to a new model value (P1 to P14) obtained by increasing or decreasing the existing model value (P1 to P14) by a predetermined amount, depending on whether the currently detected signal level is greater or smaller than the existing model value;
an evaluation level value arithmetic section (572) for calculating evaluation levels (R1 to R13) using the model values (P1 to P14) updated and stored in the plurality of storage means (576), the evaluation levels distinguishing and evaluating the plurality of signal levels of the transmission signal received by the data reception apparatus from the data transmission apparatus (1); and
an evaluation level storage section (573) for storing the evaluation levels (R1 to R13) calculated by the evaluation level value arithmetic section (572).

15. The data reception apparatus (5) according to claim 14, wherein the model values (P1 to P14) which are initialized and stored in the plurality of storage means (576) according to the predetermined conditions are the first signal levels detected corresponding to the symbols of the training pattern, by the signal level detection section (54).

16. The data reception apparatus (5) according to claim 14, wherein the model values (P1 to P14) which are initialized and stored in the plurality of storage means (576) according to the predetermined conditions are preset fixed values.

17. The data reception apparatus (5) according to claim 14, wherein the evaluation level value arithmetic section (572) calculates the evaluation levels (R1 to R13) by taking an average between any adjacent model values (P1 to P14) updated and stored in the plurality of storage means (576).

18. The data reception apparatus (5) according to claim 14, wherein:
if the currently detected signal level is greater than the existing model value (P1 to P14), the comparison and update section (574) updates, based on the symbols of the training pattern, the existing model value (P1 to P14) to a new model value (P1 to P14) obtained by adding a predetermined amount to the existing model value (P1 to P14); and
if the currently detected signal level is smaller than the existing model value (P1 to P14), the comparison and update section (574) updates, based on the symbols of the training pattern, the existing model value (P1 to P14) to a new model value obtained by subtracting a predetermined amount from the existing model value (P1 to P14).

19. The data reception apparatus (5) according to claim 18, wherein the comparison and update section (574) adds to or subtracts from the existing model value (P1 to P14) stored in the storage means (576) the predetermined amount that is set to a value which is always equal to or smaller than a difference obtained from the comparison.

20. The data reception apparatus (5) according to claim 14, wherein:
if the currently detected signal level is greater than the existing model value (P1 to P14), the comparison and update section (574) updates, based on the symbols of the training pattern, the existing model value (P1 to P14) to a new model value (P1 to P14) obtained by adding to the existing model value (P1 to P14) an amount which is equal to or smaller than the difference and which is weighted according to the difference; and
if the currently detected signal level is smaller than the existing model value (P1 to P14), the comparison and update section (574) updates, based on the symbols of the training pattern, the existing model value (P1 to P14) to a new model value obtained by subtracting from the existing model value (P1 to P14) an amount which is equal to or smaller than the difference andwhich is weighted according to the difference.

21. The data reception apparatus (5) according to claim 18, wherein:
the signal level detection section (54) detects the plurality of signal levels corresponding to the symbols of the training pattern, by calculating a difference (dd) in signal level between any of the symbols (B (k) ) and a previous symbol (B (k-1)) ; and
the evaluation levels (R1 to R13) are set for distinguishing and evaluating the plurality of signal levels received by the data reception apparatus from the data transmission apparatus (1) , based on a difference (dd) in signal level between any of the symbols (B (k)) and a previous symbol (B (k-1)).

22. The data reception apparatus (5) according to claim 21, wherein the signal level detection section (54) further outputs, when the transmission signal is received through the mapping by the data reception apparatus from the data transmission apparatus (1), results of distinguishing and evaluating the plurality of signal levels sent from the data transmission apparatus (1), using the evaluation levels (R1 to R13) stored in the evaluation level storage section (573).

23. The data reception apparatus (5) according to claim 22, wherein data to be transmitted and received is a signal having a data format defined by MOST (Media Oriented Systems Transport).

24. The data reception apparatus (5) according to claim 14, wherein:
the training pattern is sent with a predetermined header from the data transmission apparatus (1) after a lock signal has been sent, the lock signal including a clock component for establishing synchronization with the data transmission apparatus (1);
the plurality of signal levels are divided into an upper group including relatively high signal levels and a lower group including relatively low signal levels;
the training pattern and the lock signal are such that any of the signal levels selected from the upper group and any of the signal levels selected from the lower group are mapped alternately; and
the header is such that adjacent symbols are mapped to the same signal level.

25. The data reception apparatus (5) according to claim 24, further comprising:
a conversion section (52) for converting the transmission signal received into a digital signal;
a filter (53) for shaping a waveform by removing noise from the digital signal converted in the conversion section (52) ;
a clock recovery section (50) for establishing synchronization with the data transmission apparatus (1) by recovering the clock component of the lock signal converted into a digital signal in the conversion section (52); and
a reverse mapping section (55),
wherein:
the signal level detection section (54) further outputs, in accordance with clocks whose synchronization is established by the clock recovery section (50) , results of distinguishing and evaluating a plurality of signal levels of the digital signal using the evaluation levels (R1 to R13) stored in the evaluation level storage section (573); and
the reverse mapping section (55) decodes the symbols of received data which is sent as the transmission signal, by performing a reverse mapping on the evaluation results outputted by the signal level detection section (54).

26. The data reception apparatus (5) according to claim 25, further comprising:
a header detection section (58) for detecting, at the time of the initialization, the header by detecting, among the signal levels of the digital signal after synchronization is established by the clock recovery section (50), adjacent signal levels which are identical to each other; and
a teacher signal generation section (59) for outputting a teacher signal to the comparison and update section (574) based on timing at which the header is detected by the header detection section (58) and clock timing at which synchronization is established by the clock recovery section (50) , the teacher signal designating any of the storage means (576) to be updated by the comparison and update section (574).

27. The data reception apparatus (5) according to claim 26, further comprising a counter, wherein:
the training pattern is sent for a predetermined period of time from when the header is sent out;
the counter counts the predetermined period of time; and
the comparison and update section (574) detects the end of the training pattern based on counts by the counter and stops updating the model values (P1 to P14) stored in the storage means (576).

28. The data reception apparatus (5) according to claim 27, wherein the reverse mapping section (55) performs, after the training pattern has been received, a reverse mapping on the evaluation results outputted from the signal level detection section (54) and starts decoding the symbols of the received data.

29. A data transmission system having a plurality of data transmission apparatuses (1) connected to each other in a ring by transmission paths (80) , the data transmission apparatuses (1) communicating with each other in one direction, wherein the data transmission apparatuses (1) each comprise:
a data transmitting section (63 to 66) for mapping symbols of transmission data to any of a plurality of signal levels and sending a mapped electrical signal to any of the data transmission apparatuses (1) of a subsequent data transmission apparatus;
a training pattern transmitting section (67) for sending, at the time of initialization, a training pattern to the subsequent data transmission apparatus (1) , the training pattern being such that the plurality of signal levels of the electrical signal are formed in a known variation pattern;
a signal level detection section (54) for detecting signal levels from the electrical signal sent from any of the data transmission apparatuses (1) of a previous data transmission apparatus, corresponding to the symbols, and distinguishing and evaluating the detected signal levels upon data reception;
a model value storage section (571) having a plurality of storage means (576) for storing, at the time of the initialization, a model value (P1 to P14) of each of the plurality of signal levels to be received, the model values initialized according to predetermined conditions, stored in their respective storage means, and updated according to a predetermined process;
a comparison and update section (574) for repeating a process of comparing a currently detected signal level with an existing model value (P1 to P14) stored in the storage means (576) based on the symbols of the training pattern and updating the existing model value (P1 to P14) to a new model value (P1 to P14) obtained by increasing or decreasing the existing model value (P1 to P14) by a predetermined amount, depending on whether the currently detected signal level is greater or smaller than the existing model value;
an evaluation level value arithmetic section (572) for calculating evaluation levels (R1 to R13) using the model values (P1 to P14) updated and stored in the plurality of storage means (576), the evaluation levels being used by the signal level detection section (54) for distinguishing and evaluating the plurality of signal levels of the electrical signal upon data reception; and
an evaluation level storage section (573) for storing the evaluation levels (R1 to R13) calculated by the evaluation level value arithmetic section (572).

30. The data transmission system according to claim 29, wherein the model values (P1 to P14) which are initialized and stored in the plurality of storage means (576) according to the predetermined conditions are the first signal levels detected corresponding to the symbols of the training pattern, by the signal level detection section (54).

31. The data transmission system according to claim 29, wherein the model values (P1 to P14) which are initialized and stored in the plurality of storage means (576) according to the predetermined conditions are preset fixed values.

32. The data transmission system according to claim 29, wherein the evaluation level value arithmetic section (572) calculates the evaluation levels (R1 to R13) by taking an average between any adjacent model values (P1 to P14) updated and stored in the plurality of storage means (576).

33. The data transmission system according to claim 29, wherein:
if the currently detected signal level is greater than the existing model value (P1 to P14), the comparison and update section (574) updates, based on the symbols of the training pattern, the existing model value (P1 to P14) to a new model value (P1 to P14) obtained by adding a predetermined amount to the existing model value (P1 to P14); and
if the currently detected signal level is smaller than the existing model value (P1 to P14), the comparison and update section (574) updates, based on the symbols of the training pattern, the existing model value (P1 to P14) to a new model value obtained by subtracting a predetermined amount from the existing model value (P1 to P14).

34. The data transmission system according to claim 33, wherein the comparison and update section (574) adds to or subtracts from the existing model value (P1 to P14) the predetermined amount that is set to a value which is always equal to or smaller than a difference obtained from the comparison.

35. The data transmission system according to claim 29, wherein:
if the currently detected signal level is greater than the existing model value (P1 to P14), the comparison and update section (574) updates, based on the symbols of the training pattern, the existing model value (P1 to P14) to a new model value (P1 to P14) obtained by adding to the existing model value (P1 to P14) an amount which is equal to or smaller than the difference and which is weighted according to the difference; and
if the currently detected signal level is smaller than the existing model value (P1 to P14), the comparison and update section ( 574 ) updates, based on the symbols of the training pattern, the existing model value (P1 to P14) to a new model value obtained by subtracting from the existing model value (P1 to P14) an amount which is equal to or smaller than the difference andwhich is weighted according to the difference.

36. The data transmission system according to claim 33, wherein:
the signal level detection section (54) detects the plurality of signal levels by calculating a difference (dd) in signal level between any of the symbols (B (k)) and a previous symbol (B (k-1)); and
the evaluation levels (R1 to R13) are set for distinguishing and evaluating the plurality of signal levels corresponding to the symbols of the transmission signal sent from the previous data transmission apparatus (1) upon data reception, based on a difference (dd) in signal level between any of the symbols (B (k)) and a previous symbol (B (k-1)).

37. The data transmission system according to claim 36, wherein the signal level detection section (54) outputs, upon the data reception, evaluation results using the evaluation levels (R1 to R13) stored in the evaluation level storage section (573).

38. The data transmission system according to claim 37, wherein data to be transmitted and received is a signal having a data format defined by MOST (Media Oriented Systems Transport) .

39. The data transmission system according to claim 29, wherein:
the training pattern is sent with a predetermined header from the previous data transmission apparatus (1) after a lock signal has been sent, the lock signal including a clock component for establishing synchronization with the previous data transmission apparatus (1);
the plurality of signal levels are divided into an upper group including relatively high signal levels and a lower group including relatively low signal levels;
the training pattern and the lock signal are such that any of the signal levels selected from the upper group and any of the signal levels selected from the lower group are mapped alternately; and
the header is such that adjacent symbols are mapped to the same signal level.

40. The data transmission system according to claim 39, wherein the data transmission apparatuses (1) each further comprises:
a conversion section (52) for converting the electrical signal received into a digital signal;
a filter (53) for shaping a waveform by removing noise from the digital signal converted in the conversion section (52) ;
a clock recovery section (50) for establishing synchronization with the previous data transmission apparatus (1) by recovering the clock component of the lock signal; and
a reverse mapping section (55),
wherein:
the signal level detection section (54) further outputs, in accordance with clocks whose synchronization is established by the clock recovery section (50), results of distinguishing and evaluating a plurality of signal levels of the digital signal using the evaluation levels (R1 to R13) stored in the evaluation level storage section (573); and
the reverse mapping section (55) decodes the symbols of received data which is sent as the electrical signal, by performing a reverse mapping on the evaluation results outputted by the signal level detection section (54).

41. The data transmission system according to claim 40, wherein the data transmission apparatuses (1) each further comprises:
a header detection section (58) for detecting, at the time of the initialization, the header by detecting, among the signal levels of the digital signal after synchronization is established by the clock recovery section (50), adjacent signal levels which are identical to each other; and
a teacher signal generation section (59) for outputting a teacher signal to the comparison and update section (574) based on timing at which the header is detected by the header detection section (58) and clock timing at which synchronization is established by the clock recovery section (50) , the teacher signal designating any of the storage means (576) to be updated by the comparison and update section (574).

42. The data transmission system according to claim 41, wherein the data transmission apparatuses (1) each further comprises a counter, wherein:
the training pattern is sent for a predetermined period of time from when the header is sent out;
the counter counts the predetermined period of time; and
the comparison and update section (574) detects the end of the training pattern based on counts by the counter and stops updating the model values (P1 to P14) stored in the storage means (576).

43. The data transmission system according to claim 42, wherein the reverse mapping section (55) performs, after the training pattern has been received, a reverse mapping on the evaluation results outputted from the signal level detection section (54) and starts decoding the symbols of the received data.
